# EUROPEAN PATENT APPLICATION

(11) **EP 4 693 033 A1**
(43) Date of publication of application: **11.02.2026**
(21) Application number: 25194590.3
(22) Date of filing: 07.08.2025
(51) Int. Cl.: G06F 9/4401

(54) **IN A CASE OF FAILING HARDWARE SWITCH, TURNING ON AND OFF ACTUATORS IN A MICROSERVICE BASED SERVICE-ORIENTED ARCHITECTURE FOR ZONAL VEHICLE CONTROL**

(30) Priority: 09.08.2024 KR 20240106895; 13.08.2024 KR 20240108326; 09.05.2025 KR 20250060584
(71) Applicant: LG Electronics Inc., Yeongdeungpo-gu Seoul 07336 (KR)
(72) Inventor: JUNG, Junyoung, 07796 Seoul (KR); KIM, Eunjin, 07796 Seoul (KR); KIM, Yonghyun, 07796 Seoul (KR); LEE, Chulhee, 07796 Seoul (KR); PARK, Namyong, 07796 Seoul (KR); LEE, Dongkyu, 07796 Seoul (KR)
(74) Representative: Vossius & Partner Patentanwälte Rechtsanwälte mbB

(57) **Abstract**

A vehicle control apparatus according to an embodiment of the present disclosure includes: a first signal processing device including a first processor and a first memory; a second signal processing device electrically connected to the first signal processing device and including a second processor and a second memory; and a control device electrically connected to the second signal processing device and configured to receive a signal from a hardware switch or a sensor or to control at least one actuator, wherein the first or second processor is configured to: in response to a failure of the hardware switch, execute a virtual switch service and output a virtual switch object corresponding to the virtual switch service to a display which is electrically connected; and in response to the virtual switch object being selected, control a controller to output a turn-on signal, a turn-off signal, or an operation control signal to the actuator. Accordingly, a replacement service can be rapidly executed in response to the failure of the hardware device connected to the controller.

## Description

The present disclosure relates to a vehicle control apparatus, and more particularly to a vehicle control apparatus capable of rapidly executing a replacement service in response to a failure of a hardware device connected to a controller.

A vehicle is a machine that allows a user to move in a desired direction. A typical example of the vehicle is an automobile.

Meanwhile, a vehicle control apparatus is mounted in the vehicle for convenience of users who use the vehicle.

The vehicle control apparatus can be configured to perform signal processing based on sensor data received from various vehicle internal sensor devices.

Meanwhile, there is a problem in that vehicle control cannot be stably performed in response to a failure of a hardware switch, a sensor device, etc. in a vehicle.

It is an objective of the present disclosure to provide a vehicle control apparatus capable of rapidly executing a replacement service in response to a failure of a hardware device connected to a controller.

It is another objective of the present disclosure to provide a vehicle control apparatus capable of rapidly executing a Service-Oriented Architecture (SOA)-based replacement service in response to a failure of a hardware device connected to a controller.

It is yet another objective of the present disclosure to provide a vehicle control apparatus capable of efficiently executing a Service-Oriented Architecture (SOA)-based new service or updated service.

In accordance with an aspect of the present disclosure, the above and other objectives can be accomplished by providing a vehicle control apparatus including: a first signal processing device including a first processor and a first memory; a second signal processing device electrically connected to the first signal processing device and including a second processor and a second memory; and a control device electrically connected to the second signal processing device and configured to receive a signal from a hardware switch or a sensor and to control at least one actuator, wherein the first processor or the second processor is configured to: in response to a failure of the hardware switch, execute a virtual switch service and output a virtual switch object corresponding to the virtual switch service to a display which is electrically connected; and in response to the virtual switch object being selected, control the control device to output a turn-on signal, a turn-off signal, or an operation control signal to the actuator.

The "turn-on signal" refers to a signal for activating or supplying power to an actuator, and the "turn-off signal" refers to a signal for deactivating or cutting off the power supply to an actuator.

Meanwhile, the first processor or the second processor can be configured to execute a service agent for executing a vehicle service, wherein in response to the failure of the hardware switch, the service agent can be configured to further execute the virtual switch service in addition to an executed service, wherein the virtual switch service can be configured to display the virtual switch object on the display.

Meanwhile, in response to the failure of the hardware switch, the first processor or the second processor can be configured to receive data associated with the virtual switch service from an external server or an external electronic device, and store the data associated with the virtual switch service in the first memory or the second memory.

Meanwhile, the first processor or the second processor can be configured to receive the data associated with the virtual switch service in a file format.

Meanwhile, the first processor or the second processor can be configured to not transmit the data associated with the virtual switch service to the control device.

Meanwhile, in response to the virtual switch service being executed and the virtual switch object being selected after the data associated with the virtual switch service is stored, the control device can be configured to control the actuator.

Meanwhile, the second memory can include a variable data storage area for storing the data associated with the virtual switch service and a fixed data storage area for storing data associated with a fixed service.

Meanwhile, the first memory can include a variable data storage area for storing data associated with the virtual switch service.

Meanwhile, the first processor or the second processor can be configured to change an executed virtual switch service based on a type of failure of the hardware switch, and display a virtual switch object corresponding to the changed virtual switch service on the display.

Meanwhile, in response to a failure of the sensor, the first processor or the second processor can be configured to execute a virtual switch service or a replacement sensor service and output a virtual switch object corresponding to the virtual switch service or a replacement sensor object corresponding to the replacement sensor service to a display which is electrically connected. The "replacement sensor service" refers to one or more processing or operations executed for use of another sensor or device to replace the sensor in failure.

Meanwhile, in response to the virtual switch object or the replacement sensor object being selected, the first processor or the second processor can be configured to output a turn-on signal, a turn-off signal, or an operation control signal to the actuator.

Meanwhile, the first processor or the second processor can be configured to execute a service agent for executing a vehicle service, wherein in response to the failure of the sensor, the service agent can be configured to further execute the virtual switch service or the replacement sensor service in addition to the executed vehicle service.

Meanwhile, the first processor or the second processor can be configured to: in response to the failure of the sensor, receive data associated with the virtual switch service or the replacement sensor service from an external server or an external electronic device; and in response to condition data in data associated with execution of the virtual switch service or the replacement sensor service being satisfied, execute the virtual switch service or the replacement sensor service.

Meanwhile, in response to a failure of the actuator, the first processor or the second processor can be configured to execute a replacement actuator service and to output a replacement actuator object corresponding to the replacement actuator service to the display which is electrically connected.

Meanwhile, in response to the replacement actuator object being selected, the first processor or the second processor can be configured to control the controller to output a turn-on signal, a turn-off signal, or an operation control signal to another actuator.

Meanwhile, the first controller or the second controller can be configured to execute a service agent for executing a vehicle service, wherein in response to the failure of the actuator, the service agent can be configured to further execute the replacement actuator service in addition to the executed vehicle service.

In accordance with another aspect of the present disclosure, the above and other objectives can be accomplished by providing a vehicle control apparatus including: a first signal processing device including a first processor and a first memory; a second signal processing device electrically connected to the first signal processing device and including a second processor and a second memory; and a control device electrically connected to the second signal processing device and configured to receive a signal from at least one hardware device or to control the hardware device, wherein in response to a failure of the hardware device, the first processor or the second processor is configured to execute a replacement service corresponding to the hardware device and control a controller to output a turn-on signal, a turn-off signal, or an operation control signal to another hardware device based on the execution of the replacement service.

Meanwhile, in response to the failure of the hardware device, the first processor or the second processor can be configured to receive data associated with the replacement service from an external server or an external electronic device, and store the data associated with the replacement service in the first memory or the second memory.

Meanwhile, the first processor or the second processor can be configured to not transmit the data associated with the replacement service to the control device.

Meanwhile, the first processor or the second processor can be configured to execute a service agent for executing a vehicle service, wherein in response to the failure of the hardware device, the service agent can be configured to further execute the replacement service in addition to an executed service, by blocking at least a part of the replacement service and executing another part of the replacement service based on a safety level.

Meanwhile, the first controller or the second controller can be configured to execute a service agent for executing a vehicle service, wherein in response to the failure of the hardware device, the service agent can be configured to further execute the replacement service in addition to an executed service, by blocking an application programming interface (API) of a part of the replacement service and executing only an API of another part of the replacement service based on a safety level.

### BRIEF DESCRIPTION OF THE DRAWINGS

The embodiments will be described in detail with reference to the following drawings in which like reference numerals refer to like elements wherein:
FIG. 1 is a diagram illustrating an example of the exterior and interior of a vehicle;
FIG. 2 is a diagram illustrating an example of the architecture of a vehicle control apparatus;
FIG. 3A is a diagram illustrating an example of displays in a vehicle;
FIG. 3B is a diagram illustrating another example of displays in a vehicle;
FIG. 4 is an exemplary internal block diagram of a vehicle control apparatus according to an embodiment of the present disclosure;
FIGS. 5A to 5D are diagrams illustrating various examples of a vehicle control apparatus;
FIG. 6 is an exemplary block diagram of a vehicle control apparatus according to an embodiment of the present disclosure;
FIG. 7A is an exemplary diagram illustrating the operation of a central signal processing device according to an embodiment of the present disclosure;
FIG. 7B is an exemplary diagram illustrating the operation of a zonal signal processing device according to an embodiment of the present disclosure;
FIG. 8 is a diagram illustrating an example of executing a vehicle service in a signal processing device according to an embodiment of the present disclosure;
FIGS. 9 and 10 are diagrams referred to in the description of FIG. 8;
FIG. 11A is an exemplary internal block diagram of a vehicle control apparatus associated with the present disclosure;
FIG. 11B is a diagram referred to in the description of FIG. 11A;
FIG. 12A is an exemplary internal block diagram of a vehicle control apparatus according to an embodiment of the present disclosure;
FIG. 12B is a diagram referred to in the description of FIG. 12A;
FIG. 13A is a diagram illustrating an example of a failure of a hardware device in a vehicle associated with the present disclosure;
FIG. 13B is a diagram illustrating an example of operation in response to a failure of a hardware device in a vehicle according to an embodiment of the present disclosure;
FIGS. 13C to 13E are diagrams referred to in the description of FIG. 13B;
FIG. 14A is a diagram illustrating an example of operation of a vehicle control apparatus according to an embodiment of the present disclosure;
FIGS. 14B and 14C are diagrams referred to in the description of FIG. 14A;
FIG. 15A is a diagram illustrating another example of operation of a vehicle control apparatus according to an embodiment of the present disclosure;
FIGS. 15B to 17C are diagrams referred to in the description of FIG. 15A;
FIG. 18A is a flowchart illustrating an example of a method of operating a vehicle control apparatus according to an embodiment of the present disclosure;
FIG. 18B is a flowchart illustrating another example of a method of operating a vehicle control apparatus according to an embodiment of the present disclosure;
FIGS. 19A to 21B are diagrams referred to in the description of FIG. 18A or FIG. 18B;
FIG. 22A is an exemplary internal block diagram of a vehicle control apparatus according to yet another embodiment of the present disclosure;
FIGS. 22B to 22D are diagrams referred to in the description of FIG. 22A;
FIG. 23 is an exemplary internal block diagram of a vehicle control apparatus according to yet another embodiment of the present disclosure, and
FIGS. 24A to 25B are diagrams referred to in the description of FIG. 23.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

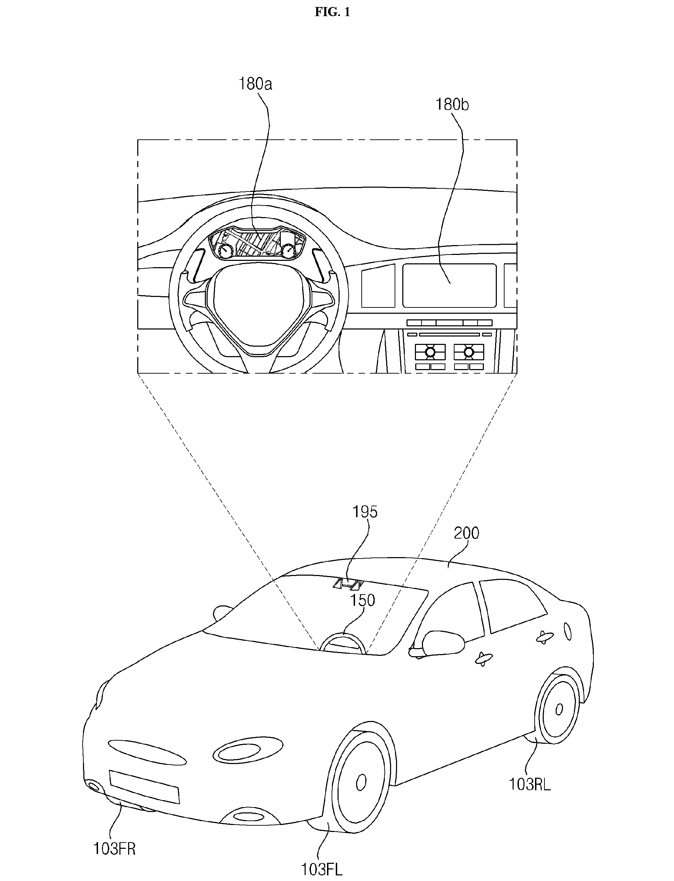

FIG. 1 is a diagram illustrating an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

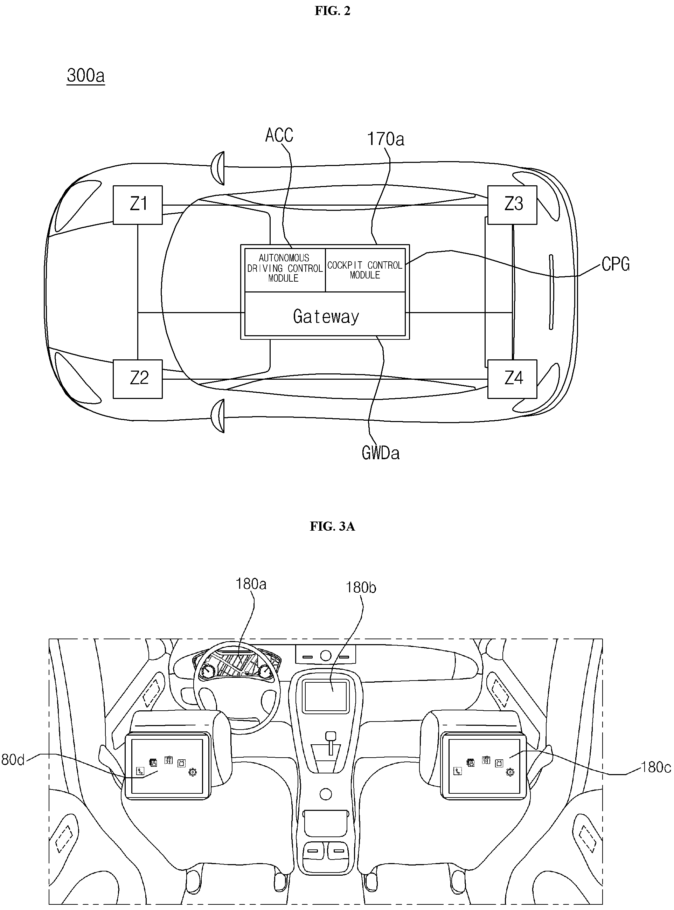

FIG. 2 is a diagram illustrating an example of the architecture of a vehicle control apparatus.

Referring to the figure, an architecture 300a of a vehicle control apparatus can correspond to a zone-based architecture.

Accordingly, vehicle internal sensor devices and processors can be mounted in each of a plurality of zones Z1 to Z4, and a signal processing device 170a including a gateway GWDa can be disposed at the center of the plurality of zones Z1 to Z4.

Meanwhile, the signal processing device 170a can further include an autonomous driving control module ACC, a cockpit control module CPG, etc., in addition to the gateway GWDa.

The gateway GWDa in the signal processing device 170a can be a High Performance Computing (HPC) gateway.

That is, as an integrated HPC gateway, the signal processing device 170a of FIG. 2 can exchange data with an external communication module (not shown) or processors (not shown) in the plurality of zones Z1 to Z4

FIG. 3A is a diagram illustrating an example of displays in a vehicle.

Referring to the figure, a cluster display 180a, an audio video navigation (AVN) display 180b, rear seat entertainment displays 180c and 180d, and a rear-view mirror display (not shown) can be mounted in the vehicle.

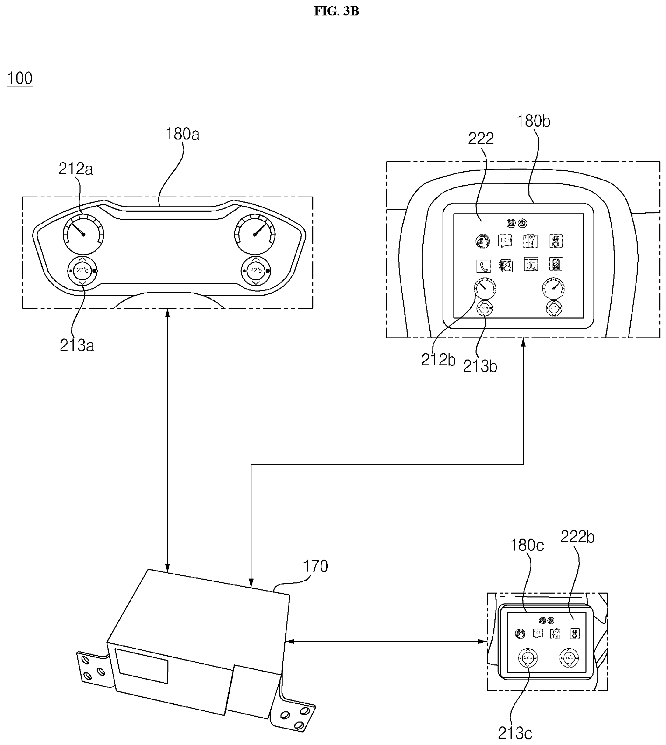

FIG. 3B is a diagram illustrating another example of displays in a vehicle.

A vehicle control apparatus 100 according to the embodiment of the present disclosure can include a plurality of displays 180a and 180b and a signal processing device 170 configured to perform signal processing in order to display images and information on the plurality of displays 180a and 180b, and to output an image signal to at least one of the displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can be configured to receive and process wheel speed sensor data of the vehicle, and can be configured to transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle control apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

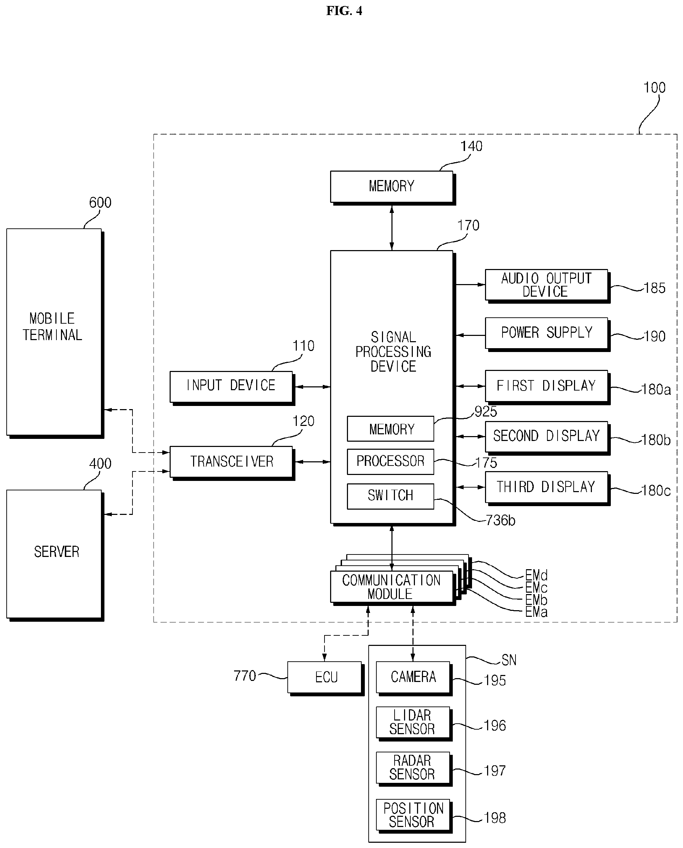

FIG. 4 is an exemplary internal block diagram of a vehicle control apparatus according to an embodiment of the present disclosure.

Referring to FIG. 4, the vehicle control apparatus 100 according to an embodiment of the present disclosure can include an input device 110, a transceiver 120 for communication with an external device, the plurality of communication modules EMa to EMd for internal communication, a memory 140, the signal processing device 170, a plurality of displays 180a to 180c, an audio output device 185, and a power supply 190.

The plurality of communication modules EMa to EMd can be disposed in a plurality of zones Z1 to Z4, respectively, in FIG. 2.

Meanwhile, the signal processing device 170 can be provided therein with a communication switch 736b for data communication with the respective communication modules EM1 to EM4.

The respective communication modules EM1 to EM4 can be configured to perform data communication with the plurality of sensor devices SN or the ECU 770.

Meanwhile, each of the plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 600 or a server 400.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can be configured to receive weather information and road traffic state information, such as Transport Protocol Experts Group (TPEG) information, from a mobile terminal 600 or a server 400. To this end, the transceiver 120 can include a mobile communication module (not shown).

The plurality of communication modules EM1 to EM4 can be configured to receive sensor data and the like from the electronic control unit (ECU) 770 or the sensor device SN or a zonal signal processing device 170Z, and can be configured to transmit the received sensor data to the signal processing device 170.

Here, the sensor data can include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

The sensor data can be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

Meanwhile, the position module can include a GPS module configured to receive GPS information or a position sensor 198.

Meanwhile, at least one of the plurality of communication modules EM1 to EM4 can be configured to transmit position information data sensed by the GPS module or the position sensor 198 to the signal processing device 170.

Meanwhile, at least one of the plurality of communication modules EM1 to EM4 can be configured to receive front image data of the vehicle, side-of-vehicle image data, rear image data of the vehicle, and obstacle-around-vehicle distance information from the camera 195, the lidar sensor 196, or the radar sensor 197, and can be configured to transmit the received information to the signal processing device 170.

The memory 140 can be configured to store various data necessary for overall operation of the vehicle control apparatus 100, such as programs for processing or control of the signal processing device 170.

For example, the memory 140 can be configured to store data associated with the hypervisor and first to third virtual machines executed by the hypervisor in the processor 175.

The audio output device 185 can convert an electrical signal from the signal processing device 170 into an audio signal, and can be configured to output the audio signal. To this end, the audio output device 185 can include a speaker.

The power supply 190 can supply power necessary to operate components under control of the signal processing device 170. In particular, the power supply 190 can be configured to receive power from a battery in the vehicle.

The signal processing device 170 can be configured to control the overall operation of each device in the vehicle control apparatus 100.

For example, the signal processing device 170 can include a processor 175 configured to perform signal processing for the vehicle displays 180a and 180b.

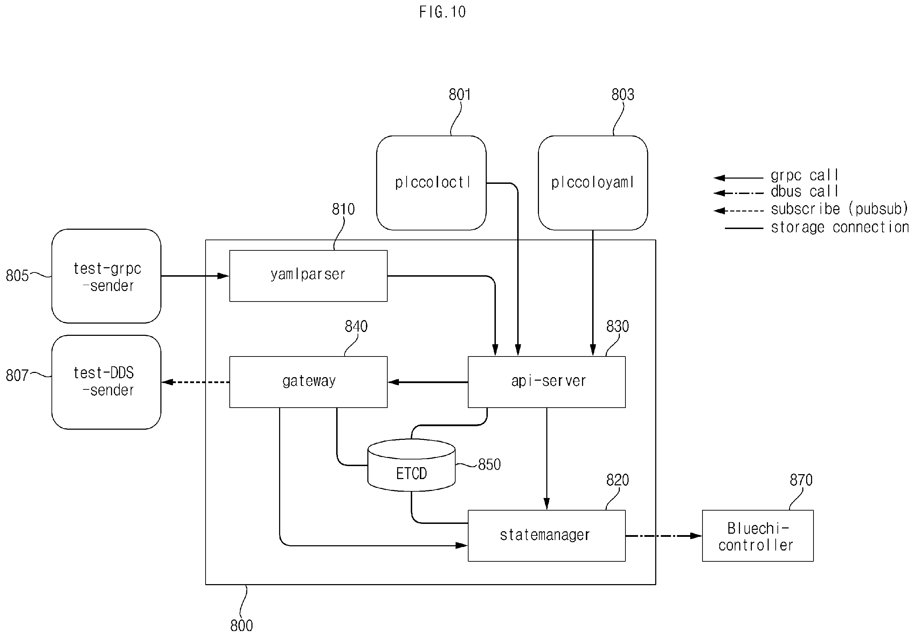

The processor 175 can be configured to execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can be configured to receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can be configured to transmit the processed data to the second and third virtual machines (not shown).

Accordingly, only the first virtual machine (not shown), among the first to third virtual machines (not shown), can be configured to receive sensor data from the plurality of sensor devices, communication data, or external input data, and can be configured to perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

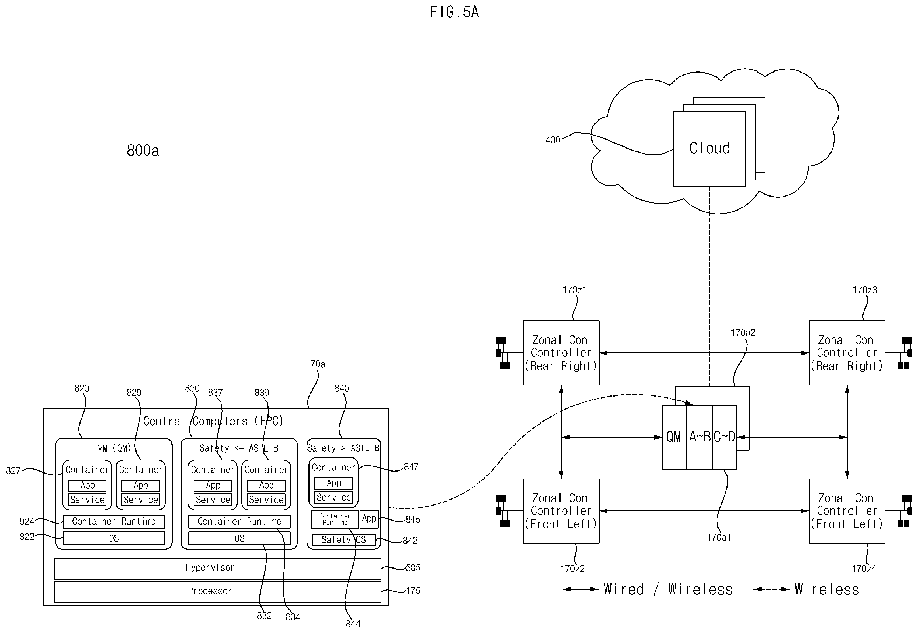

Meanwhile, the signal processing device 170 in the display device 100 of FIG. 4 can be the same as signal processing devices 170, 170a1, and 170a2 of a vehicle control apparatus of FIG. 5A and subsequent figures
FIGS. 5A to 5D are diagrams illustrating various examples of a vehicle control apparatus.

FIG. 5A is a diagram illustrating an example of a vehicle control apparatus according to an embodiment of the present disclosure.

Referring to FIG. 5A, a vehicle control apparatus 600a according to an embodiment of the present disclosure includes signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can be configured to receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 can exchange data with the communication device 120 based on wired communication.

Meanwhile, the data received by the signal processing devices 170a1 and 170a2 can include camera data or sensor data.

For example, the vehicle internal sensor data can include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data, and external vehicle lidar data.

Meanwhile, the camera data can include external vehicle camera data and vehicle internal camera data.

Meanwhile, the signal processing devices 170a1 and 170a2 can be configured to execute a plurality of virtual machines 620, 630, and 640 based on safety levels.

In the drawing, an example is illustrated in which the processor 175 in the signal processing device 170a executes the hypervisor 505, and executes first to third virtual machines 620 to 640 on the hypervisor 505 according to the Automotive Safety Integrity Level (ASIL).

The first virtual machine 620 can be a virtual machine corresponding to quality management (QM) which is the lowest risk level of the ASIL with no mandatory need.

The first virtual machine 620 can be configured to execute an operating system 622, a container runtime 624 on the operating system 622, and containers 627 and 629 on the container runtime 624.

The second virtual machine 630 can be a virtual machine corresponding to ASIL A or ASIL B with the combination of severity, exposure, and controllability values being 7 or 8.

The second virtual machine 630 can be configured to execute an operating system 632, a container runtime 634 on the operating system 632, and containers 637 and 639 on the container runtime 634.

The third virtual machine 640 can be a virtual machine corresponding to ASIL C or ASIL D with the combination of severity, exposure, and controllability values being 9 or 10.

Meanwhile, ASIL D can correspond to a grade that requires the highest level of safety.

The third virtual machine 640 can be configured to execute a safety operating system 642 and an application 645 on the operating system 642.

Meanwhile, the third virtual machine 640 can also execute the safety operating system 642, a container runtime 644 on the safety operating system 642, and a container 647 on the container runtime 644.

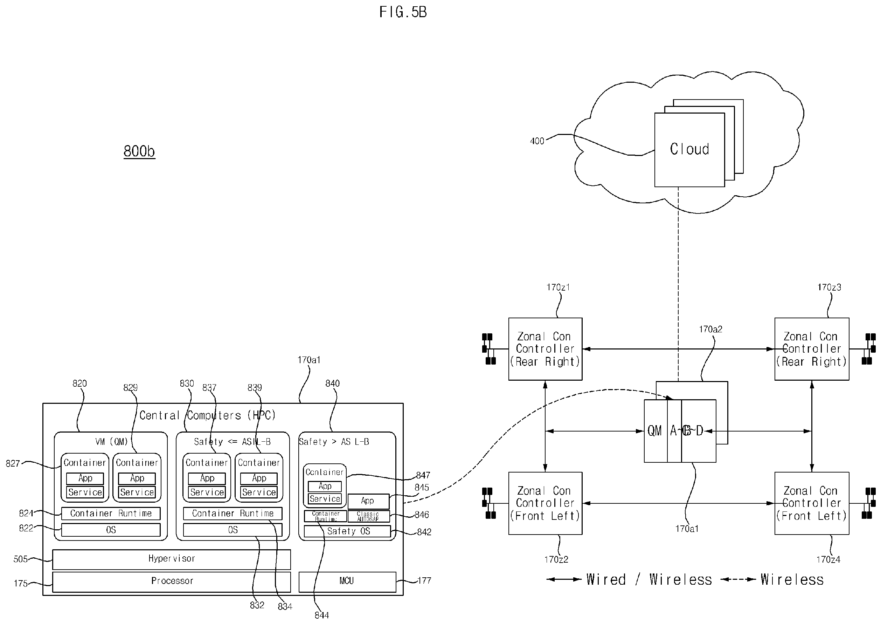

Meanwhile, unlike the drawing, the third virtual machine 640 can also be executed by a separate core, rather than by the processor 175, which will be described below with reference to FIG. 5B.

FIG. 5B is a diagram illustrating another example of a vehicle control apparatus according to an embodiment of the present disclosure.

Referring to FIG. 5B, a vehicle control apparatus 600b according to an embodiment of the present disclosure includes the signal processing devices 170a1 and 170a2 and a plurality of zonal signal processing devices 170Z1 to 170Z4.

The vehicle control apparatus 600b of FIG. 5B is similar to the vehicle control apparatus 600a of FIG. 5A, with a difference being that the signal processing device 170a1 of FIG. 5B is partially different from the signal processing device 170a1 of FIG. 5A.

The following description will focus on the difference, in which the signal processing device 170a can include a processor 175 and a second processor 177.

The processor 175 in the signal processing device 170a1 executes the hypervisor 505, and executes the first and second virtual machines 620 and 630 on the hypervisor 505 according to the ASIL.

The first virtual machine 620 can be configured to execute the operating system 622, the container runtime 624 on the operating system 622, and the containers 627 and 629 on the container runtime 624.

The second virtual machine 630 can be configured to execute the operating system 632, the container runtime 634 on the operating system 632, and the containers 637 and 639 on the container runtime 634.

Meanwhile, the second processor 177 in the signal processing device 170a1 can be configured to execute the third virtual machine 640.

The third virtual machine 640 can be configured to execute the safety operating system 642, an AUTOSAR 645 on the operating system 642, and an application 645 on the AUTOSAR 645. That is, unlike FIG. 5A, the third virtual machine 640 can further execute the AUTOSAR 646 on the operating system 642.

Meanwhile, similarly to FIG. 5A, the third virtual machine 640 can also execute the safety operating system 642, the container runtime 644 on the safety operating system 642, and the container 647 on the container runtime 644.

Meanwhile, unlike the first and second virtual machines 620 and 630, the third virtual machine 640 that requires a high safety level is desirably executed by the second processor 177 that is a different core or a different processor.

Meanwhile, in the signal processing devices 170a1 and 170a2 of FIGS. 5A and 5B, if there is abnormality in the first signal processing device 170a, the second signal processing device 170a can operate which is provided for backup purposes.

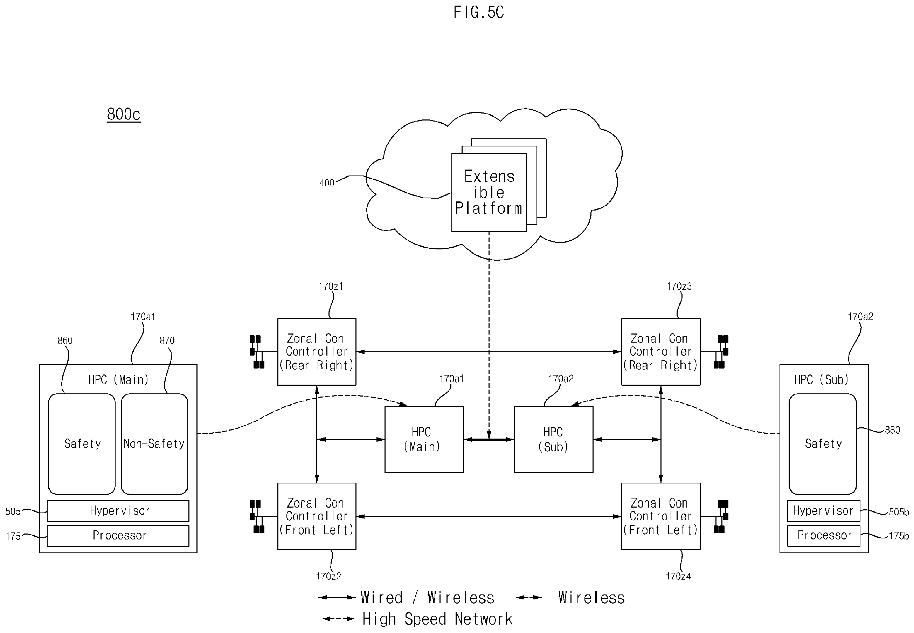

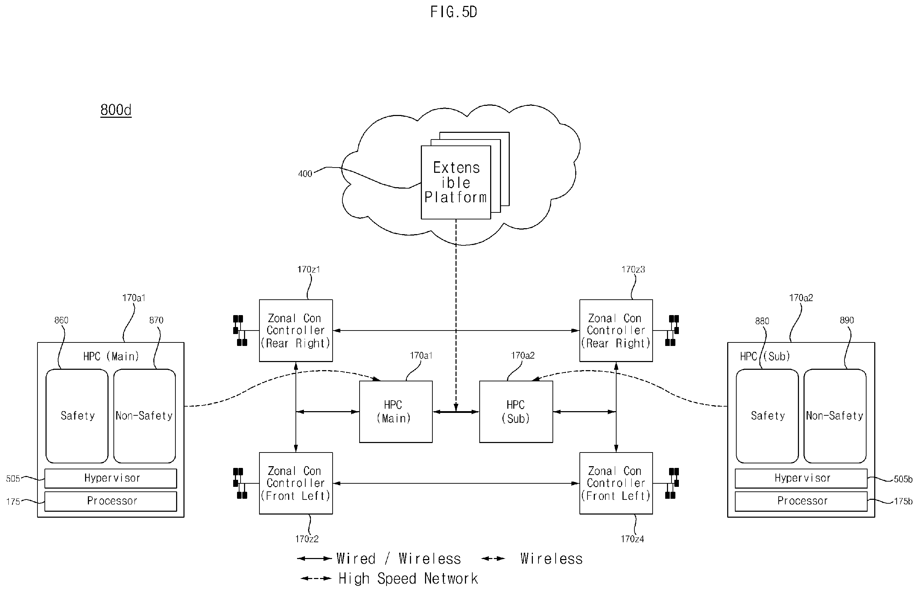

Unlike the example, the signal processing devices 170a1 and 170a2 can operate at the same time, among which the first signal processing device 170a can operate as a main device, and the second signal processing device 170a2 can operate as a sub device, which will be described below with reference to FIGS. 5C and 5D.

FIG. 5C is a diagram illustrating yet another example of a vehicle control apparatus according to an embodiment of the present disclosure.

Referring to FIG. 5C, a vehicle control apparatus 600c according to an embodiment of the present disclosure includes the signal processing devices 170a1 and 170a2 and a plurality of zonal signal processing devices 170Z1 to 170Z4.

Meanwhile, two signal processing devices 170a1 and 170a2 are illustrated in the figure, which are provided for backup and the like, and one signal processing device is also possible.

Meanwhile, the signal processing devices 170a1 and 170a2 can be referred to as a High Performance Computing (HPC) signal processing devices.

The plurality of zonal signal processing devices 170Z1 to 170Z4 can be located in the respective zones Z1 to Z4 and can be configured to transmit sensor data to the signal processing devices 170a1 and 170a2.

The signal processing devices 170a1 and 170a2 can be configured to receive data by wire from the plurality of zonal signal processing devices 170Z1 to 170Z4 or a communication device 120.

In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 can exchange data with the server 400 based on wireless communication, and the signal processing devices 170a1 and 170a2 exchange data with the communication device 120 based on wired communication.

Meanwhile, the data received by the signal processing devices 170a1 and 170a2 can include camera data or sensor data.

Meanwhile, the processor 175 in the first signal processing device 170a1 of the signal processing devices 170a1 and 170a2 can be configured to execute the hypervisor 505, and can be configured to execute each of a safety virtual machine 660 and a non safety virtual machine 670 on the hypervisor 505.

Meanwhile, the processor 175b in the second signal processing device 170a2 of the signal processing devices 170a1 and 170a2 can be configured to execute the hypervisor 505b, and can be configured to execute only a safety virtual machine 680 on the hypervisor 505.

In the method, safety and non safety virtual machines can be processed separately by the first signal processing device 170a1 and the second signal processing device 170a2, thereby improving stability and processing speed.

Meanwhile, high-speed network communication can be performed between the first signal processing device 170a1 and the second signal processing device 170a2.

FIG. 5D is a diagram illustrating yet another example of a vehicle control apparatus according to an embodiment of the present disclosure.

Referring to FIG. 5D, a vehicle control apparatus 600d according to an embodiment of the present disclosure includes the signal processing devices 170a1 and 170a2 and a plurality of zonal signal processing devices 170Z1 to 170Z4.

The vehicle control apparatus 600d of FIG. 5D is similar to the vehicle control apparatus 600c of FIG. 5C, with a difference being that the second signal processing device 170a2 of FIG. 5D is partially different from the second signal processing device 170a2 of FIG. 5C.

The processor 175b in the second signal processing device 170a2 of FIG. 5D can be configured to execute the hypervisor 505b, and can be configured to execute each of a safety virtual machine 680 and a non safety virtual machine 690 on the hypervisor 505.

That is, unlike FIG. 5C, there is a difference in that the processor 175b in the second signal processing device 170a2 further executes the non safety virtual machine 690.

In the method, safety and non safety virtual machines can be processed separately by the first signal processing device 170a1 and the second signal processing device 170a2, thereby improving stability and processing speed.

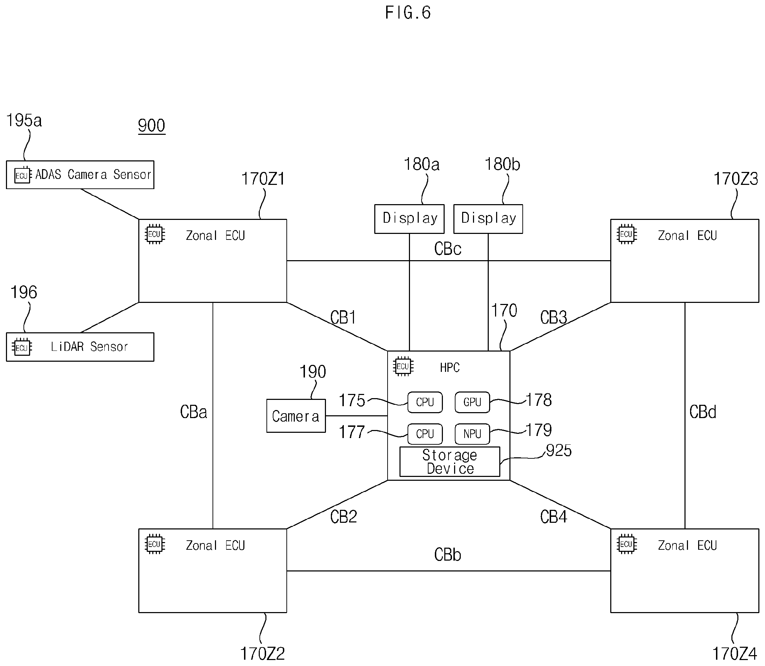

FIG. 6 is an exemplary block diagram of a vehicle control apparatus according to an embodiment of the present disclosure.

Referring to FIG. 6, a vehicle control apparatus 900 according to an embodiment of the present disclosure includes the signal processing device 170 and at least one display.

In the drawing, the cluster display 180a and the AVN display 180b are illustrated as at least one display.

Meanwhile, the vehicle control apparatus 900 can further include the plurality of zonal signal processing devices 170Z1 to 170Z4.

In this case, the signal processing device 170 is a high-performance centralized signal processing and control device including a plurality of CPUs 175, GPUs 178, NPUs 179, etc., and can be referred to as a High Performance Computing (HPC) signal processing device or a central signal processing device.

The plurality of zonal signal processing devices 170Z1 to 170Z4 and the signal processing device 170 can be connected via wired cables CB1 to CB4.

Meanwhile, the plurality of zonal signal processing devices 170Z1 to 170Z4 can be connected via wired cables CBa to CBd.

In this case, the wired cables CBa to CBd can include CAN communication cable or Ethernet communication cable, or PCI Express cable.

Meanwhile, the signal processing device 170 according to an embodiment of the present disclosure can include at least one processor 175, 178, and 177, and a storage device 925 having a large capacity.

For example, the signal processing device 170 according to an embodiment of the present disclosure can include central processors 175 and 177, a graphic processor 178, and a neural processor 179.

Meanwhile, sensor data can be transmitted from at least one of the plurality of zonal signal processing devices 170Z1 to 170Z4 to the signal processing device 170. Particularly, the sensor data can be stored in the storage device 925 in the signal processing device 170.

In this case, the sensor data can include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

To this end, the signal processing device 170 according to an embodiment of the present disclosure can be configured to perform multi path routing based on Software Defined Network (SDN). Accordingly, stable network environment for data write and read operations can be ensured. Further, data can be transmitted to the storage device 925 by using multiple paths, such that data can be transmitted by dynamically changing a network configuration.

It is desirable that data communication between the plurality of zonal signal processing devices 170Z1 to 170Z4 and the signal processing device 170 in the vehicle control apparatus 900 according to an embodiment of the present disclosure is peripheral component interconnect express communication in order to provide high band and low delay communication.

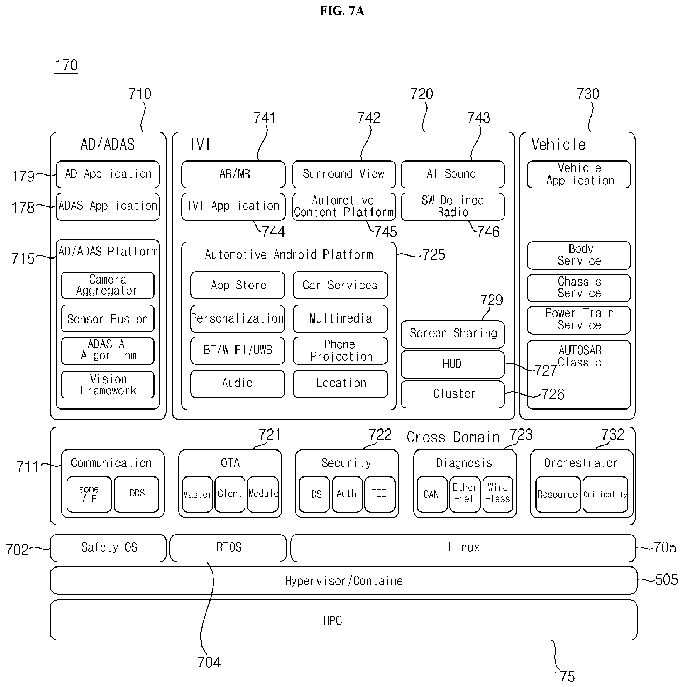

FIG. 7A is an exemplary diagram illustrating the operation of a central signal processing device according to an embodiment of the present disclosure.

Referring to FIG. 7A, a central signal processing device 170 according to an embodiment of the present disclosure includes a processor 175.

The processor 175 in the central signal processing device 170 can be configured to execute a hypervisor 505 or a container.

Meanwhile, the processor 175 can be configured to execute a software-defined vehicle (SDV) base domain on the hypervisor 505 or the container.

For example, the processor 175 can be configured to execute a communication domain 711, an OTA domain 721, a security domain 722, a diagnosis domain 723, and an Orchestrator domain 732 on the hypervisor 505 or the container.

The communication domain 711 is a domain for internal communication and can include a Scalable service-Oriented MiddlewarE over IP (SOME/IP) domain, DDS domain, and the like.

The OTA domain 721 is an update domain based on data received from the server 400, and can include a master domain, a client domain, a module domain, and the like.

The security domain 722 can include an IDS domain, an AUTH domain, a TEE domain, and the like.

The diagnosis domain 723 can include a CAN domain, an Ethernet domain, a Wireless domain, and the like.

The Orchestrator domain 732 can include a resource domain, a criticality domain, and the like.

Meanwhile, the processor 175 can be configured to execute an SDV base platform on each domain.

For example, the processor 175 can be configured to execute the SDV base autonomous driving (AD) or Advanced Driver Assistance System (ADAS) platform 715 on the communication domain 711.

Meanwhile, the AD or ADAS platform 715 can include a platform, such as camera aggregator, sensor fusion, ADAS AI algorithm, vision framework, and the like.

For example, the processor 175 can be configured to execute an SDV base vehicle platform 725 on the OTA domain 721 and the security domain 722.

Meanwhile, the vehicle platform 725 can include application store, car service, personalization multimedia, BT/WiFi/UWB, phone projection, audio, location platform, and the like.

For example, the processor 175 can be configured to execute a platform, such as SDV base screen sharing 729, HUD 727, cluster 726, etc., on the diagnosis domain 723.

Meanwhile, the processor 175 can be configured to execute a platform, such as SDV base body service, chassis service, powertrain service, AUTOSAR classic, etc., on the orchestrator domain 723.

Meanwhile, the processor 175 can be configured to execute SDV experience or application and the like on the SDV Base.

For example, the processor 175 can be configured to execute an AD application 179 or an ADAS application 178 on the AD or ADAS platform 715.

Meanwhile, the processor 175 can be configured to execute an AR/MR application 741, a surround view application 742, an AI sound application 743, an IVI application 744, an automotive content platform application 745, a SW-defined radio application 746, and the like on the vehicle platform 725, screen sharing 729, HUD 727 or cluster 726.

Meanwhile, the processor 175 can be configured to execute a vehicle application 178 and the like on the platform, such as the body service, chassis service, powertrain service, AUTOSAR classic, and the like.

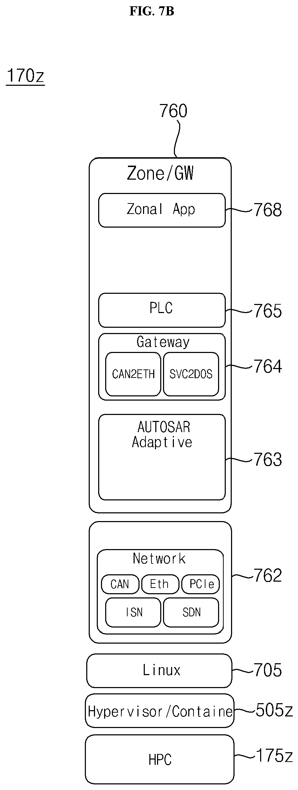

FIG. 7B is an exemplary diagram illustrating the operation of a zonal signal processing device according to an embodiment of the present disclosure.

Referring to FIG. 7B, a zonal signal processing device 170z according to an embodiment of the present disclosure includes a processor 175z.

The processor 175z in the zonal signal processing device 170z can be configured to execute a hypervisor 505z or a container.

Meanwhile, the processor 175z can be configured to execute an operating system 705 on the hypervisor 505z or the container.

Meanwhile, the processor 175z can be configured to execute a network domain 762 on the operating system 705.

Meanwhile, the network domain 762 can include CAN, Ethernet, PCIe, ISN, or SDN domain, and the like.

Meanwhile, the processor 175z can be configured to execute a platform, such as AUTOSAR Adaptive 763, gateway 764, PLC 765, etc., on the network domain 762.

Meanwhile, the processor 175z can be configured to execute a zonal application 768 and the like on the platform, such as the AUTOSAR Adaptive 763, the gateway 764, the PLC 765, and the like.

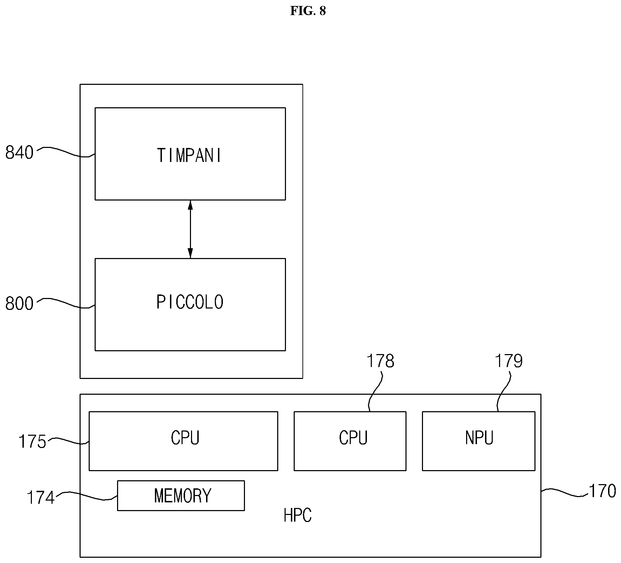

FIG. 8 is a diagram illustrating an example of executing a vehicle service in a signal processing device according to an embodiment of the present disclosure.

Referring to FIG. 8, the signal processing device 170 according to an embodiment of the present disclosure includes a processor 175 and a memory 174.

Meanwhile, the signal processing device 170 according to an embodiment of the present disclosure can further include a second processor 178 and a neural processor 179.

Meanwhile, the processor 175 according to an embodiment of the present disclosure can be configured to execute a service agent 800 for executing a vehicle service. In this case, the service agent 800 can be referred to as PICCOLO.

For example, the service agent 800 can be configured to receive execution related data for executing a vehicle service based on SDV, and can be configured to execute the vehicle service based on the execution related data.

Meanwhile, the service agent 800 can correspond to a service orchestrator.

Meanwhile, the processor 175 according to an embodiment of the present disclosure can further execute a service scheduler 840 configured to exchange data with the service agent 800 for executing a vehicle service. In this case, the service scheduler 840 can be referred to as TIMPANI.

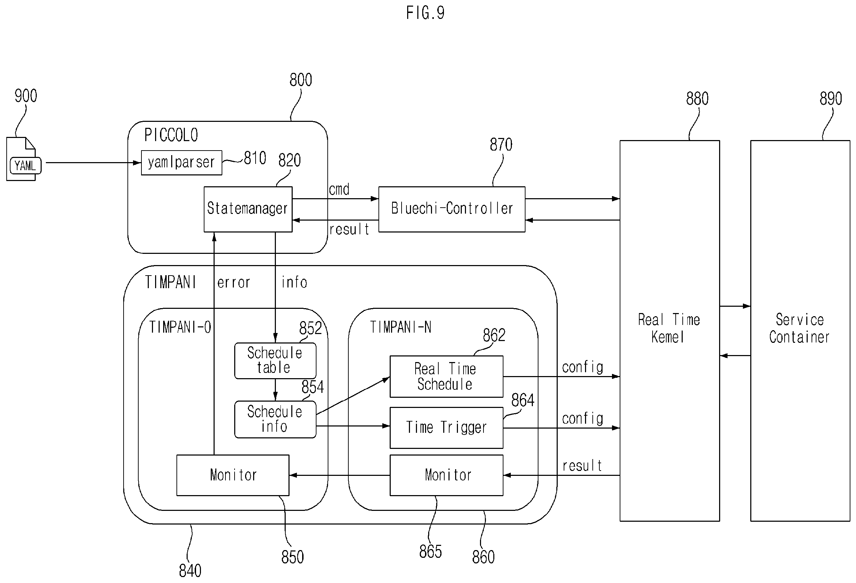

FIGS. 9 and 10 are diagrams referred to in the description of FIG. 8.

FIG. 9 is a diagram illustrating an example of executing a service based on the service agent of FIG. 8.

Referring to FIG. 9, the processor 175 according to an embodiment of the present disclosure can be configured to execute the service agent 800 for executing a vehicle service, the service schedular 840, a kernel 880, and a service container 890.

The service agent 800 can be configured to receive data associated with the execution of a service in a file format from the inside or outside of a vehicle and can be configured to output command data cmd to the outside based on the data associated with the service execution.

For example, the service agent 800 can be configured to receive the data associated with the service execution in a YAML (YAML Ain't Markup Language) file format.

Meanwhile, the service agent 800 can include a parser 810 configured to interpret or parse the data associated with the service execution, and a state manager 820 configured to transmit the command data cmd to a workload orchestrator 870 and manage a difference between a current state and a desired state so that state transition can occur.

Meanwhile, the workload orchestrator 870 can be referred to as a Bluechi controller.

Meanwhile, the workload orchestrator 870 can be configured to control a real-time kernel 880 and a service container 890 to execute a service interpreted by the service agent 800.

That is, the service container 890 can be configured to execute a service based on data from the service agent 800 or the service scheduler 840.

Meanwhile, the state manager 820 can be configured to receive result data from the workload orchestrator 870.

Meanwhile, the state manager 820 can be configured to transmit, to the service scheduler 840, information inf of data associated with the execution of the service interpreted by the parser 810, and can be configured to receive error data from the service scheduler 840.

The service scheduler 840 can include a first service scheduler 850 that operates in direct connection with the service agent 800, and a second service scheduler 860 that operates as a node in indirect connection with the first service scheduler 850.

The first service scheduler 850 can generate a schedule table 852 based on the information inf of data associated with the execution of the service interpreted by the service agent 800, and can generate schedule information 854 based on the schedule table 852 and perform monitoring.

For example, a monitor 856 in the first service scheduler 850 can be configured to transmit result data of the monitored service to the state manager 820 in the service agent 800.

Meanwhile, the schedule information 854 generated by the first service scheduler 850 can be transmitted to the second service scheduler 860.

A real-time scheduler 862 in the second service scheduler 860 can be configured to output real-time scheduling information config for service execution in the real-time kernel 880 and the service container 890 based on the schedule information 854.

Meanwhile a time trigger 864 in the second service scheduler 860 can be configured to output time trigger information config for service execution in the real-time kernel 880 and the service container 890 based on the schedule information 854.

Meanwhile, the monitor 856 in the second service scheduler 860 can collect result data associated with system resource status of a node and real-time driving state, and can be configured to transmit the result data to the monitor 856 in the first service scheduler 850.

FIG. 10 is a diagram illustrating an example of internal configuration of the service agent of FIG. 8 or FIG. 9.

Referring to FIG. 10, the service agent 800 according to an embodiment of the present disclosure can include the parser 810, the gateway 840, the server 830, and the state manager 820.

Meanwhile, the service agent 800 can further include a storage 850.

The parser 810 can be configured to receive data associated with the execution of a vehicle service based on SDV, and can interpret or parse the data associated with the service execution.

Meanwhile, the parser 810 can be configured to receive the data associated with the service execution in a YAML (YAML Ain't Markup Language) file format, and can interpret or parse the data associated with the service execution in the YAML file.

Further, the parser 810 can be configured to transmit the interpreted or parsed data to the server 830 or register the data as a resource in the storage 850.

Meanwhile, the parser 810 can be configured to store data required later for generating workload in the storage 850.

Meanwhile, the parser 810 can be configured to perform transformation into a manifest corresponding to the workload orchestrator 870 which is a multi-node service controller.

For example, the parser 810 can be configured to receive, from a remote procedure call (RPC) sender 805 or REST API, a manifest in the YAML file format which is an example of the data associated with the service execution, or in other formats.

The server 830 can be configured to receive parsing result data of the parser 810 and can share the parsing result data with other modules. In this case, the server 830 can be referred to as an API server.

For example, the server 830 can classify the parsing result data of the parser 810 into condition data and action data and store the classified data in the storage 850.

Meanwhile, the server 830 can be configured to transmit a key value for reading the condition data or action data as part of the parsing result data from the storage 850 to the gateway 840.

Meanwhile, the server 830 can be configured to control some data for managing the state of the service agent 800 or some state information to be stored in the storage 850.

Meanwhile, the server 830 can support or request remote procedure call (RPC) and API for external communication.

Meanwhile, the server 830 can be configured to receive a direct request from a direct requester 801 or can be configured to receive a request for generating workload from a workload generation requester 803.

Meanwhile, the server 830 can be configured to transmit the received direct request or workload generation request to the work orchestrator 870.

The gateway 840 can be configured to receive vehicle messages in various formats and can identify a vehicle state based on the received vehicle messages.

Meanwhile, the gateway 840 can filter data in the received vehicle messages and can operate according to a desired vehicle scenario by triggering an event based on the filtered data.

Meanwhile, the gateway 840 can read condition data stored in the storage 850 based on the key value received from the server 830 and can generate a filter based on the condition data.

Meanwhile, the gateway 840 can be configured to transmit a message for a vehicle sensor to a message sender 807.

Meanwhile, the filter can identify a vehicle state based on the received vehicle message, e.g., DDS message, and can continuously identify whether a condition corresponding to the condition data is satisfied.

Meanwhile, if the condition corresponding to the condition data is satisfied, the gateway 840 can be configured to transmit scenario information to the state manager 820 and delete the filter.

Meanwhile, the state manager 820 can act as a node with the workload orchestrator 870.

For example, the state manager 820 can be configured to manage a difference between a current state and a desired state so that state transition can occur.

Meanwhile, the state manager 820 can be configured to transmit a request for an additional instruction to the workload orchestrator 870 based on the direct request received from the server 830.

Meanwhile, upon receiving, from the gateway 840, scenario information that satisfies the condition, the state manager 820 can set a key value based on the scenario information, and can read action data from the storage 850 based on the set key value.

Meanwhile, the action data can include data indicating a workload container to be executed.

Meanwhile, the state manager 820 can read data, required for generating the workload stored in the storage 850 by the parser 810, based on the action data.

Meanwhile, the state manager 820 can be configured to transmit command data, such as start, update, rollback, or terminate, etc., to the workload orchestrator 870 based on the received data required for generating the workload.

Meanwhile, the workload orchestrator 870 can be configured to execute corresponding functions or commands based on the command data, such as start, update, rollback, or terminate, etc., received from the state manager 820, or can be configured to transmit the command data to the service container 890.

Meanwhile, the storage 850 can be configured to store the key value, and the key value can be used for various services, such as Kubemetes and the like.

Meanwhile, the storage 850 can be configured to store data required for generating workload by the parser 810.

Meanwhile, the storage 850 can be configured to store parsing result data of the parser 810. In this case, the storage 850 can be configured to store the parsing result data by classifying the data into condition data and action data.

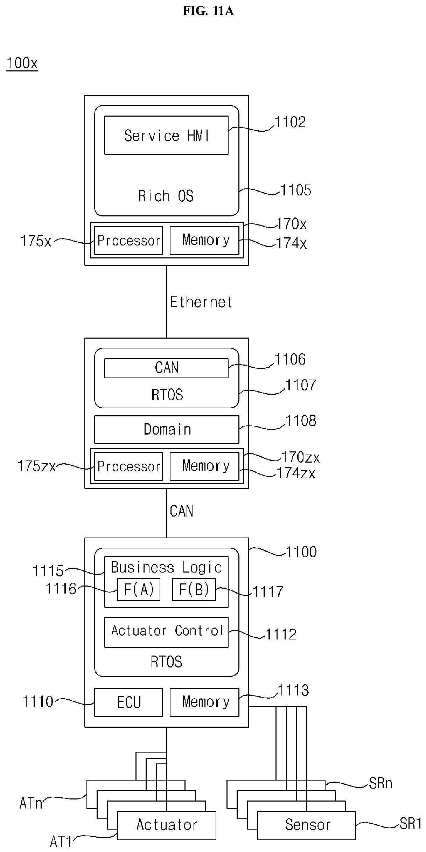

FIG. 11A is an exemplary internal block diagram of a vehicle control apparatus associated with the present disclosure.

Referring to FIG. 11A, a vehicle control apparatus 100x associated with the present disclosure includes a central signal processing device 170x, a zonal signal processing device 170zx, and a control device 1100.

The central signal processing device 170x associated with the present disclosure can include a first processor 175x and a first memory 174x. The first processor 175x can be configured to execute an operating system 1105 and an HMI service 1102.

Meanwhile, the central signal processing device 170x can be configured to perform Ethernet communication with the zonal signal processing device 170zx.

The zonal signal processing device 170zx associated with the present disclosure can include a second processor 175zx and a second memory 174zx. The second processor 175zx can be configured to execute a domain 1108, an operating system 1107, and a CAN communication service 1106.

Meanwhile, the zonal signal processing device 170zx can be configured to perform CAN communication with the control device 1100.

The control device 1100 associated with the present disclosure can include a controller 1230 and a memory 1234. The controller 1230 can be configured to execute an operating system 1236, actuator control 1235, and a control logic-based vehicle service 1105.

Meanwhile, the vehicle service 1105 can include a first vehicle service 1106 and a second vehicle service 1117.

The control device 1100 associated with the present disclosure can be configured to control a plurality of actuators AT1 to ATn or a plurality of sensor devices SR1 to SRn based on the actuator control 1235 or the vehicle service 1105.

In the vehicle control apparatus 100x associated with the present disclosure of FIG. 11A, the controller 1230 in the control device 1100 outputs a control signal for controlling the plurality of actuators AT1 to ATn.

Meanwhile, it is required to update the data in the memory 1234 in order to control the plurality of actuators AT1 to ATn by updating with a new service.

Particularly, in order to control the plurality of actuators AT1 to ATn by updating with a new service, it is required to update data corresponding to the first vehicle service 1106, or data corresponding to the second vehicle service 1117, or data corresponding to the actuator control 1235 in the memory 1234.

However, the control device 1100 performs CAN communication with the zonal signal processing device 170zx, such that it can be difficult for the control device 1100 to receive the updated data from the external server 400 via the zonal signal processing device 170zx and the central signal processing device 170x.

In addition, due to a limited capacity of a third memory 1113 in the control device 1100 and the like, it can be difficult to store new service data or updated data.

For this reason, the vehicle control apparatus 100x associated with the present disclosure in FIG. 11A can be difficult to operate the plurality of actuators AT1 to ATn based on the new vehicle service or updated vehicle service.

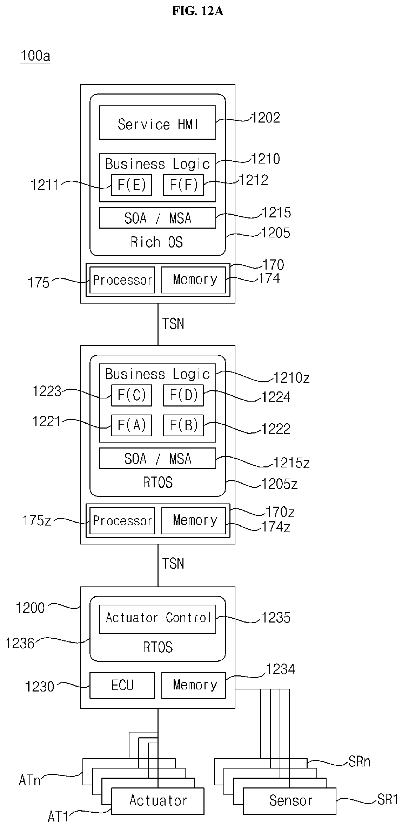

Accordingly, the present disclosure proposes a method of efficiently executing a new service or updated service, which will be described below with reference to FIG. 12A or subsequent figures.

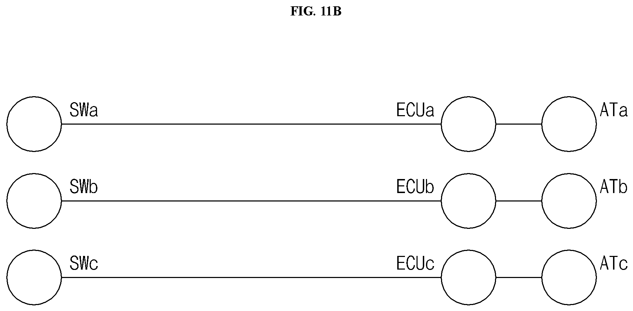

FIG. 11B is a diagram referred to in the description of FIG. 11A.

Referring to FIG. 11B, a plurality of controllers ECUa to ECUc in the vehicle control apparatus 100x associated with the present disclosure can be configured to receive switching signals from a plurality of switches SWa to SWc, respectively, and can be configured to control each of the actuators ATa to ATc based on each of the switching signals.

The method has a drawback in that as the number of actuators ATa to ATc increases, the number of controllers ECUa to ECUc also increases.

Accordingly, the present disclosure proposes a method of efficiently controlling the plurality of actuators by using a controller, which will be described below with reference to FIG. 12A and subsequent figures.

FIG. 12A is an exemplary internal block diagram of a vehicle control apparatus according to an embodiment of the present disclosure.

Referring to FIG. 12A, the vehicle control apparatus 100 according to an embodiment of the present disclosure includes a first signal processing device 170, a second signal processing device 170z electrically connected to the first signal processing device 170, and a control device 1200 electrically connected to the second signal processing device 170z.

The first signal processing device 170, which is a central signal processing device, includes a first processor 175 and a first memory 174.

The second signal processing device 170z, which is a zonal signal processing device, includes a second processor 175z and a second memory 174z.

Meanwhile, the control device 1200 is electrically connected to the second signal processing device 170z, and receives a signal from a hardware switch 3212 or a sensor SRm or controls at least one actuator ACT.

Meanwhile, in response to a failure of the hardware switch 2312, the first processor 175 or the second processor 175z executes a virtual switch service and outputs a virtual switch object corresponding to the virtual switch service to the display 180 which is electrically connected, and in response to the virtual switch object being selected, controls a controller 2330 to output a turn-on signal, a turn-off signal, or an operation control signal to the actuator ACT.

Accordingly, a replacement service can be rapidly executed in response to a failure of the hardware device connected to the controller 2330. Particularly, a Service-Oriented Architecture (SOA)-based replacement service can be rapidly executed in response to a failure of the hardware device connected to the controller 2330.

Meanwhile, the first memory 174 can include a changed data area SPA1 for storing data associated with a virtual switch service.

Meanwhile, the first memory 174 can further include a fixed data area SPA2 for storing data associated with a fixed service.

Meanwhile, the second memory 174z can include a changed data area SPA3 for storing data associated with a virtual switch service and a fixed data area SPA4 for storing data associated with a fixed service.

Meanwhile, the first signal processing device 170 and the second signal processing device 170z can be configured to perform Time Sensitive Networking (TSN) communication based on Ethernet communication.

Meanwhile, a method of communication between the second signal processing device 170z and the control device 1200 is desirably the same as a method of communication between the first signal processing device 170 and the second signal processing device 170z.

For example, the method of communication between the first signal processing device 170z and the second signal processing device 170z can be Time Sensitive Networking (TSN) communication based on Ethernet communication.

Meanwhile, the control device 1200 can control a plurality of actuators AT1 to ATn or receive signals from a plurality of sensors SR1 to SRn.

Meanwhile, the control device 1200 includes a memory 1234 in addition to the controller 1230.

Meanwhile, the memory 123 can include a fixed data area for storing data associated with controlling of the plurality of actuators AT1 to ATn or data associated with the plurality of sensors SR1 to SRn.

That is, the memory 1234 desirably includes no changed data area for storing data associated with a new service or a virtual switching service.

Meanwhile, the first processor 175 in the first signal processing device 170 according to an embodiment of the present disclosure can be configured to execute an operating system 1205 and can be configured to execute an HMI service 1202 on the operating system 1205.

Meanwhile, the first processor 175 in the first signal processing device 170 can be configured to execute a first service agent 2350a on the operating system 1205.

Meanwhile, unlike FIG. 11A, the first processor 175 in the first signal processing device 170 can be configured to execute a Service-Oriented Architecture (SOA)-based service or a microservice Architecture (MSA)-based microservice 1215 on the operating system 1205.

Meanwhile, the first processor 175 in the first signal processing device 170 can be configured to execute a control logic-based vehicle service 1210 on the operating system 1205.

The vehicle service 1210 can include at least one vehicle service, and a first vehicle service 1211 and a second vehicle service 1212 are illustrated in the drawing.

Meanwhile, the first vehicle service 1211 or the second vehicle service 1212 can include a service for controlling at least one of the plurality of actuators AT1 to ATn.

Meanwhile, the first vehicle service 1211 or the second vehicle service 1212 can be updated based on the updated data received from the external server 400 or an external electronic device 600.

Meanwhile, the first vehicle service 1211 or the second vehicle service 1212 can be a new vehicle service based on data received from the external server 400 or the external electronic device 600.

Meanwhile, the second processor 175z in the second signal processing device 170z can be configured to execute a second service agent 2350b on the operating system 1205z.

Meanwhile, the second processor 175z in the second signal processing device 170z according to an embodiment of the present disclosure can be configured to execute an operating system 1205z and can be configured to execute an SOA-based service or a microservice 1215z on the operating system 1205z.

Meanwhile, the second processor 175z in the second signal processing device 170z can be configured to execute a vehicle service 1210z on the operating system 1205z.

The vehicle service 1210z can include at least one vehicle service, and a third vehicle service 1221, a fourth vehicle service 1222, a fifth vehicle service 1223, and a sixth vehicle service 1224 are illustrated in the drawing.

Meanwhile, at least one of the third vehicle service 1221 to the sixth vehicle service 1224 can include a service for controlling at least one of the plurality of actuators AT1 to ATn.

Meanwhile, the third vehicle service 1221 or the fourth vehicle service 1222 can be a new vehicle service based on data received from the external server 400 or the external electronic device 600.

Meanwhile, the fifth vehicle service 1223 or the sixth vehicle service 1224 can be updated based on the updated data received from the external server 400 or the external electronic device 600.

The control device 11200 according to an embodiment of the present disclosure includes a controller 1230 and a memory 1234.

The controller 1230 can be configured to execute an operating system 1236 and can be configured to execute actuator control 1235 on the operating system 1236.

Meanwhile, unlike FIG. 11A, the controller 1230 can be configured to execute only the actuator control 1235 without executing a vehicle service.

That is, the vehicle service is desirably executed by the second signal processing device 170z instead of the control device 1200.

The control device 1200 according to an embodiment of the present disclosure can be configured to control the plurality of actuators AT1 to ATn or the plurality of sensor devices SR1 to SRn based on the actuator control 1235.

In this case, the actuator control 1235 can be configured to output a turn-on signal, a turn-off signal, or an operation control signal for at least one of the plurality of actuators AT1 to ATn.

The control device 1200 according to an embodiment of the present disclosure can be configured to control at least one of the plurality of actuators AT1 to ATn based on sensor data from at least one of the plurality of sensor devices SR1 to SRn.

The second processor 175z according to an embodiment of the present disclosure executes the third vehicle service 1221 to control the controller 1230 in the control device 1200 to output a turn-on signal or a turn-off signal to at least one of the plurality of actuators AT1 to ATn.

Meanwhile, the first memory 174 in the first signal processing device 170 or the second memory 174z in the second signal processing device 170z can be configured to receive data associated with the execution of the fifth vehicle service 1223, which is added or updated in addition to the third vehicle service 1221, from the external server 400 or the external electronic device 600, and can be configured to store the received data.

Meanwhile, if the fifth vehicle service 1223 is executed after the data associated with the execution of the fifth vehicle service 1223, which is added or updated in addition to the third vehicle service 1221, is stored in the first memory 174 of the first signal processing device 170 or the second memory 174z of the third signal processing device 170z2, the second processor 175z according to an embodiment of the present disclosure controls the controller 1230 in the control device 1200 to output a turn-on signal, a turn-off signal, or an operation control signal to at least one of the plurality of actuators AT1 to ATn based on the fifth vehicle service 1223.

In this case, the second processor 175z is configured to not transmit the data associated with the execution of the fifth vehicle service 1223, which is added or updated, to the control device 1200.

That is, the control device 1200 does not execute the vehicle service and does not receive the data associated with the execution of the vehicle service.

As described above, while not executing the vehicle service and not receiving the data associated with the execution of the vehicle service, the control device 1200 outputs a turn-on signal, a turn-off signal, or an operation control signal to at least one of the plurality of actuators AT1 to ATn, thereby enabling simple operation of the control device 1200.

In addition, the control device 1200 does not require a new service or a service update, etc., thereby stably controlling the plurality of actuators AT1 to ATn.

Meanwhile, a new service, a service update, and the like can be efficiently executed by the second signal processing device 170z, rather than the control device 1200. Particularly, an SOA-based new service or an updated service can be efficiently executed by the second signal processing device 170z.

Meanwhile, the data associated with the execution of the fifth vehicle service 1223 can include condition data and action data.

Meanwhile, the second processor 175z can be configured to execute the fifth vehicle service 1223 if condition data in the data associated with the execution of the fifth vehicle service 1223 is satisfied. Accordingly, a new fifth vehicle service 1223 or an updated fifth vehicle service 1223 can be efficiently executed.

Meanwhile, the operation control signal can include an operation speed control signal, an operation intensity control signal, or an operation temperature control signal.

For example, the controller 1230 in the control device 1200 can be configured to output the operation speed control signal, the operation intensity control signal, or the operation temperature control signal to at least one of the plurality of actuators AT1 to ATn based on the fifth vehicle service 1223.

Accordingly, the operation speed, operation intensity, or operation temperature of at least one of the plurality of actuators AT1 to ATn can be controlled based on the fifth vehicle service 1223. As a result, the new fifth vehicle service 1223 or the updated fifth vehicle service 1223 can be efficiently executed.

Meanwhile, the fifth vehicle service 1223 can include a microservice.

For example, the second processor 175z can be configured to execute the fifth vehicle service 1223, which is a microservice, if condition data in the data associated with the execution of the fifth vehicle service 1223 is satisfied. Accordingly, a new microservice or an updated microservice can be efficiently executed.

Meanwhile, the first processor 175 can be configured to execute the first vehicle service 1211 based on the received sensor data and transmit information associated with the execution of the first vehicle service 1211 to the second processor 175z.

Meanwhile, the sensor data can include at least one of vehicle driving sensor data, occupant status sensor data, and vehicle surrounding sensor data.

Meanwhile, the first processor 175 can be configured to execute the first vehicle service 1211 if the sensor data satisfies a condition for executing the first vehicle service 1211.

Meanwhile, the second processor 175z can be configured to control the controller 1230 by executing the fifth vehicle service 1223 based on the information associated with the execution of the first vehicle service 1211.

Further, the controller 1230 in the control device 1200 can be configured to output the operation speed control signal, the operation intensity control signal, or the operation temperature control signal to at least one of the plurality of actuators AT1 to ATn based on the fifth vehicle service 1223. Accordingly, a new service or an updated service can be efficiently executed.

Meanwhile, the first processor 175 can be configured to execute the first vehicle service 1211 based on a received first input signal and sensor data and transmit the information associated with the execution of the first vehicle service 1211 to the second processor 175z, and the second processor 175z can be configured to control the controller 1230 by executing the fifth vehicle service 1223 based on the information associated with the execution of the first vehicle service 1211. Accordingly, a new service or an updated service can be efficiently executed.

Meanwhile, the first processor 175 can be configured to transmit the received first input signal to the second processor 175z, and the second processor 175z can be configured to control the controller 1230 by executing the third vehicle service 1221 based on the first input signal.

Meanwhile, the controller 1230 can be configured to control at least one of the plurality of actuators AT1 to ATn based on the third vehicle service 1221. Accordingly, the third vehicle service 1221 can be efficiently executed.

Meanwhile, the second processor 175z can be configured to control the controller 1230 by executing the fifth vehicle service 1223 based on the received sensor data. Accordingly, a new service or an updated service can be efficiently executed based on the sensor data.

Meanwhile, the second processor 175z can be configured to control the controller 1230 by executing the fifth vehicle service 1223 based on the received first input signal and the sensor data. Accordingly, a new service or an updated service can be efficiently executed based on the first input signal and the sensor data.

Meanwhile, the second processor 175z can be configured to execute the fifth vehicle service 1223 if the sensor data satisfies a condition for executing the fifth vehicle service 1223. Accordingly, a new service or an updated service can be efficiently executed based on the sensor data.

Meanwhile, the second processor 175z can be configured to control the controller 1230 by executing the third vehicle service 1221 based on the first input signal. Accordingly, the third vehicle service 1221 can be efficiently executed.

Meanwhile, the data associated with the execution of the fifth vehicle service 1223 can include condition data and action data. In this case, at least one of the condition data and action data can be updated.

Accordingly, a new service or an updated service can be efficiently executed based on the updated data.

Meanwhile, the condition data can include vehicle driving sensor data, occupant status sensor data, and vehicle surrounding sensor data. Accordingly, a new service or an updated service can be efficiently executed based on the condition data.

Meanwhile, when the second processor 175z executes the fifth vehicle service 1223, the controller 1230 can be configured to receive operation status data of the actuators AT1 to ATn, and change the operation status of the actuators AT1 to ATn based on the operation status data of the actuators AT1 to ATn. Accordingly, a new service or an updated service can be efficiently executed based on the operation status data of the actuators.

Meanwhile, the controller 1230 can be configured to control turning on or off of the actuators based on the third vehicle service 1221, and change the operation speed of the actuators AT1 to ATn based on the fifth vehicle service 1223. Accordingly, the fifth vehicle service 1223 can be efficiently executed.

Meanwhile, at least one of the actuators AT1 to ATn of FIG. 12A can operate for the movement of the vehicle seat, and at least one of the sensors SR1 to SRn can be a vehicle internal camera.

In this case, the controller 1230 can be configured to control the actuators AT1 to ATn for the movement of the vehicle seat based on the third vehicle service 1221 executed based on an input signal.

Meanwhile, the controller 1230 can be configured to control the actuators AT1 to ATn or a seat motor 1451 for any one of movement speed, movement control, movement intensity, and automatic movement of the vehicle seat, based on the fifth vehicle service 1223 executed based on vehicle internal camera data. Accordingly, the fifth vehicle service 1223 can be efficiently executed.

Meanwhile, at least one of the actuators AT1 to ATn of FIG. 12A can be configured to operate for temperature control in the vehicle, and at least one of the sensors SR1 to SRn can be a vehicle internal camera.

In this case, the controller 1230 can be configured to control the actuators AT1 to ATn for temperature control in the vehicle based on the third vehicle service 1221 executed based on the input signal.

Meanwhile, the controller 1230 can be configured to control the actuators AT1 to ATn for any one of temperature control, wind direction control, and fan speed in the vehicle, based on the fifth vehicle service 1223 executed based on vehicle internal camera data. Accordingly, the fifth vehicle service 1223 can be efficiently executed.

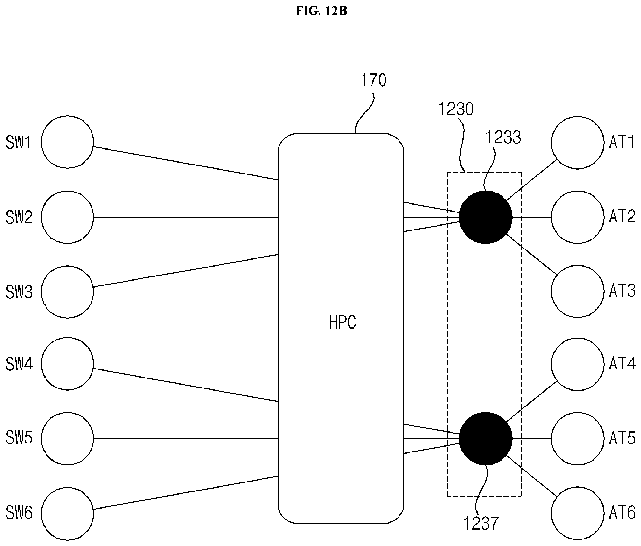

FIG. 12B is a diagram referred to in the description of FIG. 12A.

Referring to FIG. 12B, the first signal processing device 170 in the vehicle control apparatus 100 according to an embodiment of the present disclosure can be configured to receive switching signals from a plurality of switches SW1 to SW6, respectively, for operating actuators AT1 to AT6.

Meanwhile, the first signal processing device 170 can be configured to transmit the switching signals from each of the plurality of switches SW1 to SW6 to the control device 1200 via the second signal processing device 170z which is a zonal signal processing device.

Meanwhile, the first controller 1233 in the control device 1200 can be configured to receive some part of the plurality of switching signals, and the second controller 1247 can be configured to receive another part of the plurality of switching signals.

Meanwhile, the first controller 1233 can be configured to control some actuators AT1 to AT3, among the plurality of actuators AT1 to AT6, to operate based on the received switching signals.

Accordingly, unlike FIG. 11B, combined operation of the plurality of actuators AT1 to AT3 can be performed by the first controller 1233, thereby efficiently operating the plurality of actuators AT1 to AT3.

Meanwhile, the second controller 1237 can be configured to control other actuators AT4 to AT6, among the plurality of actuators AT1 to AT6, to operate based on the received switching signals.

Accordingly, unlike FIG. 11B, combined operation of the plurality of actuators AT4 to AT6 can be performed by the second controller 1237, thereby efficiently operating the plurality of actuators AT4 to AT6.

As a result, a composite service for operating the plurality of actuators can be efficiently executed by using the first signal processing device 170 or the second signal processing device 170z.

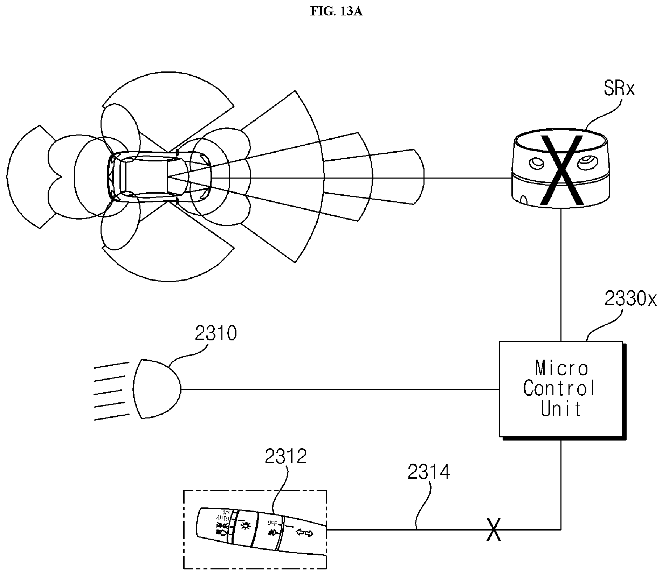

FIG. 13A is a diagram illustrating an example of a failure of a hardware device in a vehicle associated with the present disclosure.

Referring to FIG. 13A, a controller 2330x in the vehicle associated with the present disclosure can be configured to control a lighting device 2310 of the vehicle based on an input signal from a hardware switch 2312 or a signal from a camera or a sensor SRm such as an illumination sensor.

Meanwhile, in response to a failure or fault in the hardware switch 2312 or a failure occurring due to a short circuit in wiring between the hardware switch 2312 and the controller 2330x, etc., there is a problem in that the controller 2330x cannot control the operation of the lighting device 2310 of the vehicle despite the operation of the hardware switch 2312.

Meanwhile, in response to a failure of the camera or the sensor SRm such as the illumination sensor, there is a problem in that the controller 2330x cannot control the operation of the lighting device 2310 of the vehicle even when the area around the vehicle is dark.

As described above, there is a problem in that the controller 2330x cannot perform a control operation in response to a failure of the hardware device connected to the controller 2330x, e.g., the hardware switch 2312 or the sensor SRm.

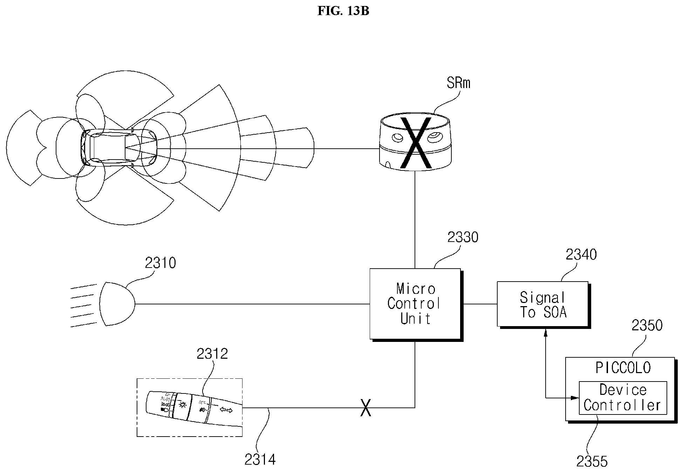

Accordingly, the present disclosure proposes a method of executing a replacement service or operating another hardware device even when a failure occurs in the hardware device connected to the controller 2330, e.g., the hardware switch 2312 or the sensor SRm, which will be described below with reference to FIG. 13B and subsequent figures.

FIG. 13B is a diagram illustrating an example of operation in response to a failure of a hardware device in a vehicle according to an embodiment of the present disclosure.

Referring to FIG. 13B, a controller 2330 in a control device 1200 of a vehicle control apparatus 100 according to an embodiment of the present disclosure can be configured to control a lighting device 2310 of the vehicle based on an input signal from a hardware switch 2312 or a signal from a camera or a sensor SRm such as an illumination sensor.

For example, the controller 2330 in the vehicle control apparatus 100 according to an embodiment of the present disclosure can be configured to operate the lighting device 2310 of the vehicle based on the input signal from the hardware switch 2312.

In another example, the controller 2330 in the vehicle control apparatus 100 according to an embodiment of the present disclosure can be configured to operate the lighting device 2310 of the vehicle if a level of the signal from the camera or the sensor SRm such as the illumination sensor is lower than a reference level.

Meanwhile, the controller 2330 of FIG. 13B can correspond to the controller 1230 of FIG. 12A.

Meanwhile, in response to a failure of the hardware switch 2312 or a failure occurring due to a short circuit in wiring between the hardware switch 2312 and the controller 2330, the controller 2330 in the vehicle control apparatus 100 can be configured to transmit a fault signal of the hardware device to an interface 2340 in the second signal processing device 170z of the control device 1200.

Meanwhile, the second processor 175z in the second signal processing device 170z or the first processor 175 in the first signal processing device 170 can be configured to determine whether a failure occurs in the hardware switch 2312 or in the camera or the sensor SRm such as the illumination sensor, based on the received fault signal.

Meanwhile, the second processor 175z in the second signal processing device 170z or the first processor 175 in the first signal processing device 170 can be configured to execute a service agent 2350 for executing a vehicle service.

Meanwhile, in response to a failure in the hardware switch 2312 or in the camera or the sensor SRm such as the illumination sensor, the service agent 2350 for executing a vehicle service can be configured to further execute a virtual switch service for lighting device control 2355 in addition to an executed service.

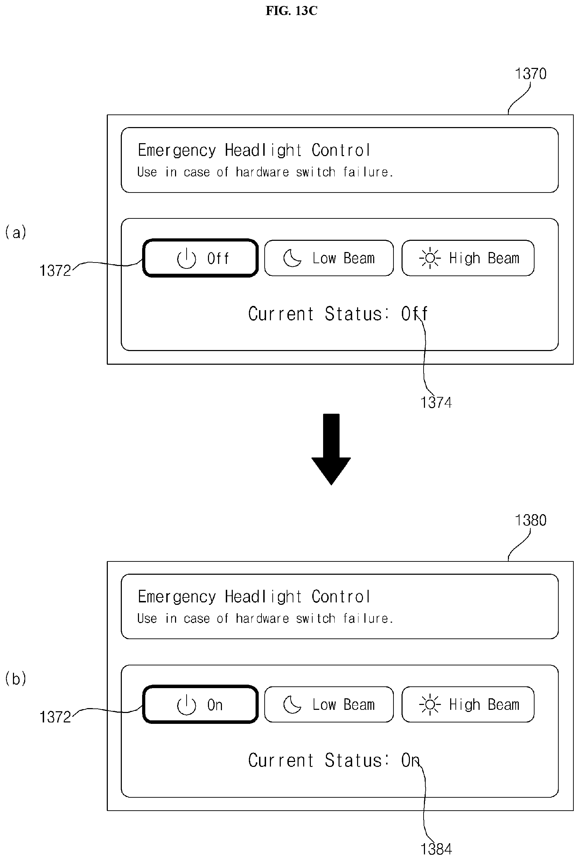

FIG. 13C is a diagram illustrating an example of a virtual switch object displayed on a display in a vehicle.

Referring to FIG. 13C, the second processor 175z in the second signal processing device 170z or the first processor 175 in the first signal processing device 170 can be configured to execute a virtual switch service in addition to an executed service, in response to a failure in the hardware switch 2312 or in the camera or the sensor SRm such as the illumination sensor.

Meanwhile, the second processor 175z in the second signal processing device 170z or the first processor 175 in the first signal processing device 170 can be configured to display a virtual switch object, corresponding to the virtual switch service, on the display 180.

In the drawing, an example is illustrated in which while a screen 1370 including an emergency headlight control OFF item 1373 and an emergency headlight control OFF indicator 1374 is displayed, a screen 1380 including an emergency headlight control ON item 1372 and an emergency headlight control ON indicator 1384 is displayed in response to a failure in the hardware switch 2312 or in the camera or the sensor SRm such as the illumination sensor.

The emergency headlight control ON item 1372 in the screen 1380 can correspond to the virtual switch object described above.

That is, in response to the emergency headlight control ON item 1372 corresponding to the virtual switch object being selected, the second processor 175z in the second signal processing device 170z or the first processor 175 in the first signal processing device 170 can be configured to output a turn-on signal, a turn-off signal, or an operation control signal to the lighting device 2310 for emergency headlight control. Accordingly, a replacement service can be rapidly executed in response to a failure of the hardware device connected to the controller 2330.

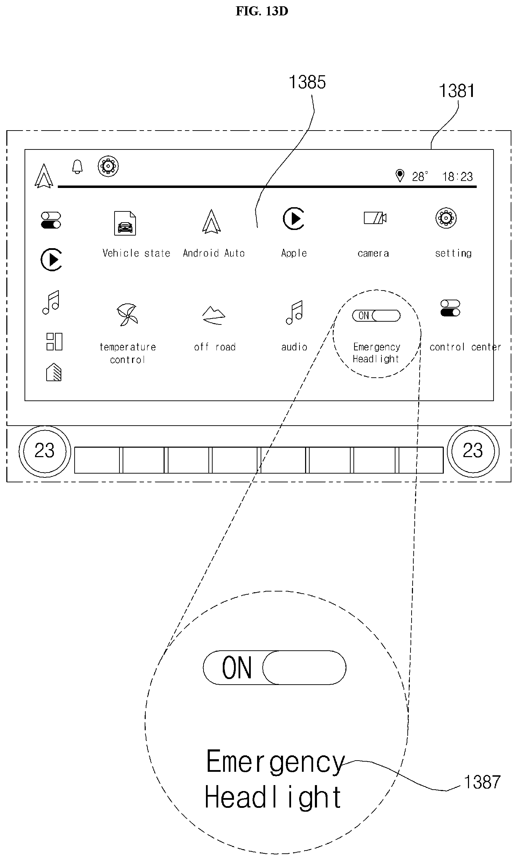

FIG. 13D is a diagram illustrating another example of a virtual switch object displayed on a display in a vehicle.

Referring to FIG. 13D, the second processor 175z in the second signal processing device 170z or the first processor 175 in the first signal processing device 170 can be configured to display a screen 1381, including various vehicle control items, on the display 180.

Meanwhile, the second processor 175z in the second signal processing device 170z or the first processor 175 in the first signal processing device 170 can be configured to display a virtual switch object, such as an emergency headlight control item 1387, in response to a failure in the hardware switch 2312 or in the camera or the sensor SRm such as the illumination sensor.

Meanwhile, in response to the emergency headlight control item 1387 being selected, the second processor 175z in the second signal processing device 170z or the first processor 175 in the first signal processing device 170 can be configured to output a turn-on signal, a turn-off signal, or an operation control signal to the lighting device 2310 for emergency headlight control. Accordingly, a replacement service can be rapidly executed in response to a failure of the hardware device connected to the controller 2330.

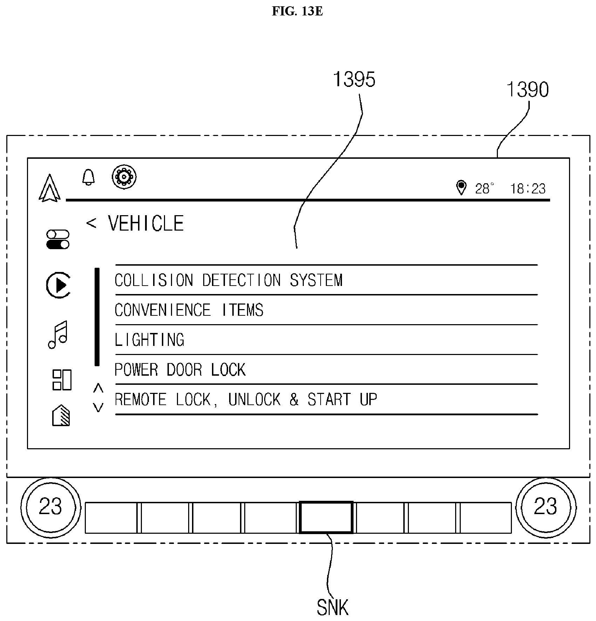

FIG. 13E is a diagram illustrating another example of a virtual switch object displayed on a display in a vehicle.

Referring to FIG. 13E, the second processor 175z in the second signal processing device 170z or the first processor 175 in the first signal processing device 170 can be configured to display a screen 1390, including various vehicle control items, on the display 180.

Meanwhile, the second processor 175z in the second signal processing device 170z or the first processor 175 in the first signal processing device 170 can be configured to control a virtual switch object, such as an emergency headlight control item SNK, to be displayed at a location close to an external switch on the screen 1390 in response to a failure in the hardware switch 2312 or in the camera or the sensor SRm such as the illumination sensor.

Meanwhile, in response to the emergency headlight control item SNK being selected, the second processor 175z in the second signal processing device 170z or the first processor 175 in the first signal processing device 170 can be configured to output a turn-on signal, a turn-off signal, or an operation control signal to the lighting device 2310 for emergency headlight control. Accordingly, a replacement service can be rapidly executed in response to a failure of the hardware device connected to the controller 2330.

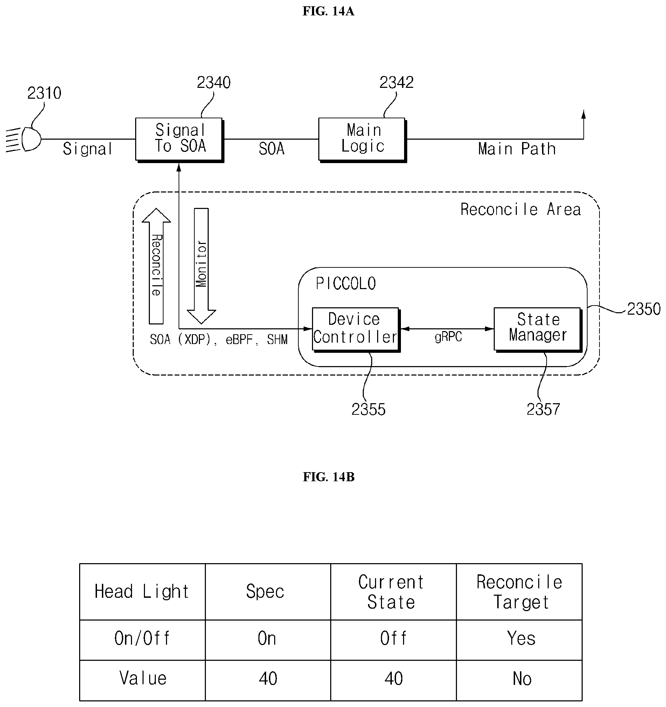

FIG. 14A is a diagram referred to in the description of the service agent of FIG. 13B.

Referring to FIG. 14A, the second processor 175z in the second signal processing device 170z can be configured to receive a fault signal from the interface 2340 in the second signal processing device 170z, in response to a failure or fault in the hardware switch 2312 or in the camera or the sensor SRm such as the illumination sensor.

Meanwhile, the interface 2340 in the second signal processing device 170z can also transmit the fault signal to a main logic processor 2342 in the first signal processing device 170.

Meanwhile, the second processor 175z in the second signal processing device 170z can be configured to execute the service agent 2350 for executing a vehicle service, in response to a failure in the hardware switch 2312 or in the camera or the sensor SRm such as the illumination sensor.

For example, the service agent 2350 and the interface 2340 in the second signal processing device 170z can be configured to exchange an SOA-based signal, or a signal based on eXpress Data Path (XDP), or a signal based on Extended Berkeley Packet Filter (eBPF), or a signal based on Shared Memory (SHM).

Meanwhile, the service agent 2350 for executing a vehicle service can be configured to execute a virtual switch service for lighting device control 2355 in addition to an executed service, in response to a failure in the hardware switch 2312 or in the camera or the sensor SRm such as the illumination sensor.

Meanwhile, the service agent 2350 for executing a vehicle service can include a state manager 2357 configured to transmit command data cmd to a workload orchestrator 870.

Meanwhile, the state manager 2357 and the lighting device control 2355 can be configured to perform communication based on Remote Procedure Call (RPC).

Meanwhile, in response to a failure in the hardware switch 2312 or in the camera or the sensor SRm such as the illumination sensor, the service agent 2350 can be configured to execute a replacement service to replace the hardware switch 2312 or the camera or the sensor SRm such as the illumination sensor.

FIG. 14B is a diagram referred to in the description of a replacement service executed by the service agent of FIG. 14A.

Referring to FIG. 14B, the service agent 2350 can be configured to execute a replacement service to replace the sensor SRm in response to a failure of the camera or the sensor SRm such as the illumination sensor,.

For example, in the case in which the lighting device 2310 is required to be ON at night based on a specification, but the current state is an OFF state due to a failure in the hardware switch 2312 or in the camera or the sensor SRm such as the illumination sensor, the service agent 2350 can be configured to set a Reconcile Target to be turned on.

Meanwhile, if an illumination level of a signal received from the camera or the sensor SRm such as the illumination sensor is "level 40" based on the specification, and the current state is also "level 40," the service agent 2350 can be configured not to set the Reconcile Target.

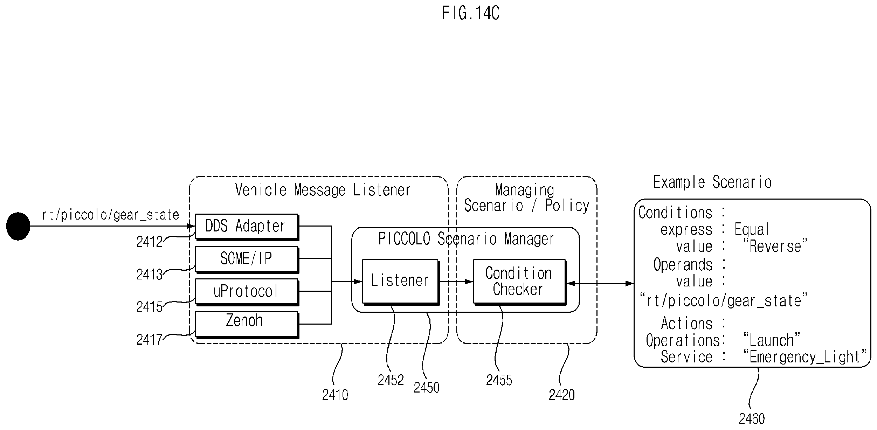

FIG. 14C is a diagram referred to in the description of operation of a service agent based on an example scenario.

Referring to FIG. 14C, the service agent 2350 can be configured to receive command data cmd and the like from the service agent 2350.

Meanwhile, the second processor 175z in the second signal processing device 170z or the first processor 175 in the first signal processing device 170 can be configured to execute the service agent 2350.

The service agent 2350 can be configured to execute a vehicle message receiver 2410 and a scenario processor 2420.

The vehicle message receiver 2410 can include DDS adapter 2412, SOME/IP receiver 2413, micro protocol receiver (uProtocol) 2415, and Zenoh receiver 2417 associated with a distribution protocol.

Meanwhile, the service agent 2350 can be configured to execute a scenario manager 2540 between the vehicle message receiver 2410 and the scenario processor 2420.

The scenario processor 2420 can include a receiver 2452 and a condition checker 2455.

The receiver 2452 of the scenario processor 2420 can be configured to receive data from the DDS adapter 2412, the SOME/IP receiver 2413, the micro protocol receiver (uProtocol) 2415, or the Zenoh receiver 2417.

Meanwhile, the condition checker 2455 can be configured to check condition data received from the receiver 2452.

Meanwhile, the condition checker 2455 can be configured to check condition data in the example scenario 2460.

In the drawing, an example is illustrated in which the example scenario 2460 includes condition data and action data for gear state.

Meanwhile, the condition checker 2455 can be configured to check condition data for the gear state in the example scenario 2460 and can be configured to control an action, corresponding to action data, to be executed based on the condition data.

For example, if a gear state is a "reverse" state as shown in the example scenario 2460, the service agent 2350 can be configured to control the lighting device 2310 to operate for emergency light. Accordingly, it is possible to control the lighting device 2310 to efficiently operate based on a vehicle state.

Meanwhile, unlike the example, the internal configuration of the service agent 2350 in FIG. 14C can also be provided in the vehicle service orchestrator 870.

For example, the service agent 2350 can also execute the vehicle message receiver 2410 and the scenario processor 2420.

In addition, the service agent 2350 can also execute the scenario manager 2540 between the vehicle message receiver 2410 and the scenario processor 2420.

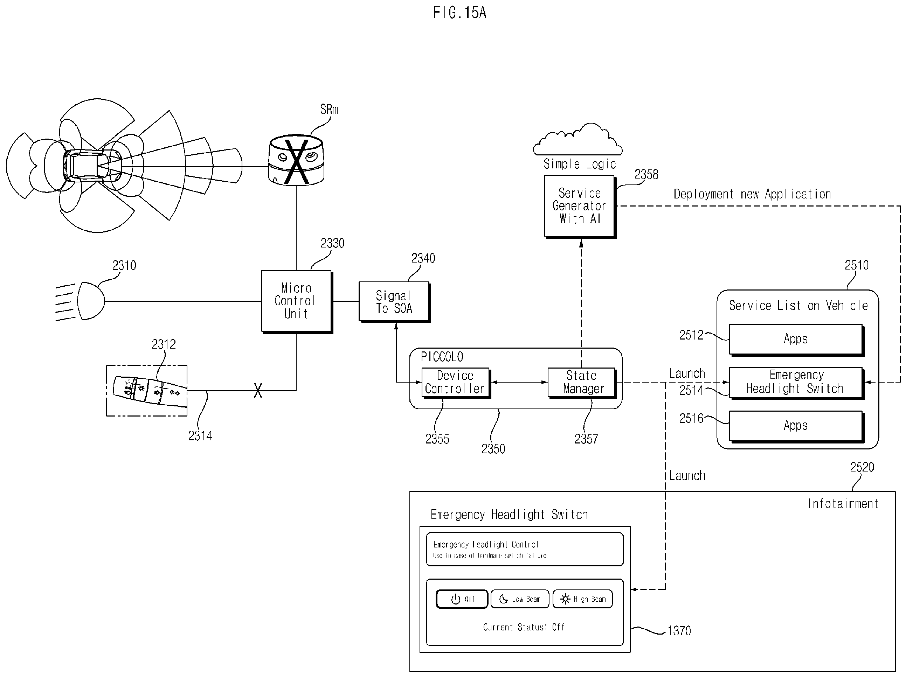

FIG. 15A is a diagram illustrating another example of operation of a vehicle control apparatus according to an embodiment of the present disclosure. Particularly, FIG. 15A is a diagram referred to in the description of the service agent and the virtual switch service of FIG. 13B.

Referring to FIG. 15A, the controller 2330 in the control device 1200 of the vehicle control apparatus 100 according to an embodiment of the present disclosure can be configured to control the lighting device 2310 of the vehicle based on the input signal from the hardware switch 2312 or the signal from the camera or the sensor SRm such as the illumination sensor.

Meanwhile, in response to a failure or fault in the hardware switch 2312 or a failure occurring due to a short circuit in wiring between the hardware switch 2312 and the controller 2330, the controller 2330 in the vehicle control apparatus 100 can be configured to transmit a fault signal of the hardware device to the interface 2340 in the second signal processing device 170z of the control device 1200.

Meanwhile, the second processor 175z in the second signal processing device 170z or the first processor 175 in the first signal processing device 170 can be configured to determine whether a failure occurs in the hardware switch 2312 or in the camera or the sensor SRm such as the illumination sensor, based on the received fault signal.

Meanwhile, the second processor 175z in the second signal processing device 170z or the first processor 175 in the first signal processing device 170 can be configured to execute a service agent 2350 for executing a vehicle service.

Meanwhile, the service agent 2350 for executing a vehicle service can be configured to execute a virtual switch service for lighting device control 2355 in addition to an executed service, in response to a failure in the hardware switch 2312 or in the camera or the sensor SRm such as the illumination sensor.

Meanwhile, the service agent 2350 for executing a vehicle service can include the state manager 2357 configured to transmit command data cmd to the workload orchestrator 870.

Meanwhile, in response to a failure in the hardware switch 2312 or in the camera or the sensor SRm such as the illumination sensor, the service agent 2350 can be configured to execute a replacement service to replace the hardware switch 2312 or the camera or the sensor SRm such as the illumination sensor.

For example, the state manager 2357 in the service agent 2350 can be configured to transmit, to the server 400 and the like, a request for generating a replacement service corresponding to a hardware failure and the like.

In response thereto, the server 400 can be configured to receive the request for generating the replacement service corresponding to the hardware failure, and can be configured to generate a replacement service 2358 based on the request.

In this case, the server 400 can be configured to generate the replacement service 2358 by using artificial intelligence (AI) and the like.

In addition, the server 400 can be configured to transmit data associated with the generated replacement service to the second processor 175z in the second signal processing device 170z or the first processor 175 in the first signal processing device 170.

Meanwhile, the second processor 175z in the second signal processing device 170z or the first processor 175 in the first signal processing device 170 can be configured to add a replacement service 2514 to an in-vehicle service list 2510.

In the drawing, an example is illustrated in which the second processor 175z in the second signal processing device 170z or the first processor 175 in the first signal processing device 170 adds the replacement service 2514 to the in-vehicle service list 2510, in addition to existing services 2512 and 1216.

Meanwhile, the second processor 175z in the second signal processing device 170z or the first processor 175 in the first signal processing device 170 can be configured to execute the replacement service 2514 added to the in-vehicle service list 2510, in response to a failure in the hardware switch 2312 or in the camera or the sensor SRm such as the illumination sensor.

Specifically, the service agent 2350 can be configured to execute the replacement service 2514 added to the in-vehicle service list 2510, in response to a failure in the hardware switch 2312 or in the camera or the sensor SRm such as the illumination sensor.

For example, in response to a failure in the hardware switch 2312 or in the camera or the sensor SRm such as the illumination sensor, the service agent 2350 displays a screen 1370 including an emergency headlight control item, and in response to the emergency headlight control item being selected such that the emergency headlight control ON item is activated, the service agent 2350 can be configured to output a turn-on signal, a turn-off signal, or an operation control signal to the lighting device 2310 for emergency headlight control. Accordingly, a replacement service can be rapidly executed in response to a failure of the hardware device connected to the controller 2330.

Meanwhile, the first processor 175 or the second processor 175z can be configured to change an executed virtual switch service based on the type of failure of the hardware switch 2312, and can be configured to display a virtual switch object, corresponding to the changed virtual switch service, on the display 180. Accordingly, a replacement service can be rapidly executed in response to a failure of the hardware device connected to the controller 1230.

For example, if the failure of the hardware switch 2312 is a failure of a switch of the lighting device, the first processor 175 or the second processor 175z can be configured to display a virtual switch object, corresponding to the virtual switch service for emergency lighting control, on the display 180.

In another example, if the failure of the hardware switch 2312 is a failure of a switch of the vehicle window, the first processor 175 or the second processor 175z can be configured to display a virtual switch object, corresponding to the virtual switch service for emergency window control, on the display 180.

Meanwhile, in response to a failure of the sensor SRm, the first processor 175 or the second processor 175z can be configured to execute a virtual switch service or a replacement sensor service and to output, to the display 180 which is electrically connected, a virtual switch object corresponding to the virtual switch service or a replacement sensor object corresponding to the replacement sensor service. Accordingly, a replacement service can be rapidly executed in response to a failure of the hardware device connected to the controller 1230.

For example, in response to a failure of an ultrasonic sensor in the sensor SRm, the first processor 175 or the second processor 175z can be configured to output, to the display 180 which is electrically connected, a replacement sensor object corresponding to the replacement sensor service using a lidar sensor which is another hardware. Accordingly, a replacement service can be rapidly executed in response to a failure of the hardware device connected to the controller 1230.

In another example, in response to a failure of a lidar sensor in the sensor SRm, the first processor 175 or the second processor 175z can be configured to output, to the display 180 which is electrically connected, a replacement sensor object corresponding to the replacement sensor service using an ultrasonic sensor which is another hardware. Accordingly, a replacement service can be rapidly executed in response to a failure of the hardware device connected to the controller 1230.

Meanwhile, in response to the virtual switch object or the replacement sensor object being selected, the first processor 175 or the second processor 175z can be configured to control the controller 1230 to output a turn-on signal, a turn-off signal, or an operation control signal to the actuator ACT. Accordingly, a replacement service can be efficiently executed in response to a failure of the hardware device connected to the controller 1230.

For example, in response to a failure of a lidar sensor in the sensor SRm and the replacement sensor object being selected while the replacement sensor object corresponding to the replacement sensor service using the ultrasonic sensor is displayed, the first processor 175 or the second processor 175z can be configured to control the controller 1230 to output a turn-on signal, a turn-off signal, or an operation control signal to the actuator ACT. Accordingly, a replacement service can be efficiently executed in response to a failure of the hardware device connected to the controller 1230.

Meanwhile, in response to a failure of the actuator ACT, the first processor 175 or the second processor 175z can be configured to execute a replacement actuator service and output a replacement actuator ACT object corresponding to the replacement actuator service to the display 180 which is electrically connected. Accordingly, a replacement service can be rapidly executed in response to a failure of the hardware device connected to the controller 1230.

Meanwhile, in response to the replacement actuator ACT object being selected, the first processor 175 or the second processor 175z can be configured to control the controller 1230 to output a turn-on signal, a turn-off signal, or an operation control signal to another actuator ACT. Accordingly, a replacement service can be efficiently executed in response to a failure of the hardware device connected to the controller 1230.

Meanwhile, the first processor 175 or the second processor 175z can be configured to execute the service agent 2350 for executing a vehicle service, and the service agent 2350 can be configured to execute a replacement actuator service in addition to an executed service, in response to a failure of the actuator ACT. Accordingly, a replacement service can be rapidly executed in response to a failure of the hardware device connected to the controller 1230.

Meanwhile, in response to a failure of the sensor SRm, the first processor 175 or the second processor 175z can be configured to receive data associated with a virtual switch service or a replacement sensor service from an external service 400 or an external electronic device, and to execute the virtual switch service or the replacement sensor service if condition data in data associated with the execution of the virtual switch service or the replacement sensor service is satisfied. Accordingly, a replacement service can be rapidly executed in response to a failure of the hardware device connected to the controller 1230.

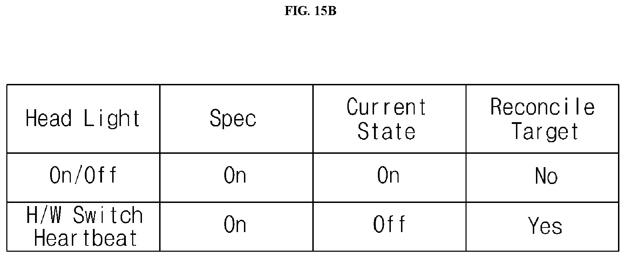

FIG. 15B is a diagram referred to in the description of a replacement service executed by the service agent of FIG. 15A.

Referring to FIG. 15B, in response to a failure of the camera or the sensor SRm such as the illumination sensor, the service agent 2350 can be configured to execute a replacement service to replace the sensor SRm.

For example, in the case in which the lighting device 2310 is required to be ON at night based on a specification, and the hardware switch 2312 or the camera or the sensor SRm such as the illumination sensor operates normally such that the current state is an ON state, the service agent 2350 can be configured to control a Reconcile Target to be turned off.

In another example, in the case in which based on the operation of the hardware switch 2312, the lighting device 2310 is required to be ON based on the specification, but the current state is an OFF state due to a failure of the hardware switch 2312, the service agent 2350 can be configured to set a Reconcile Target to be turned on. Accordingly, a replacement service can be rapidly executed in response to a failure of the hardware device connected to the controller 2330.

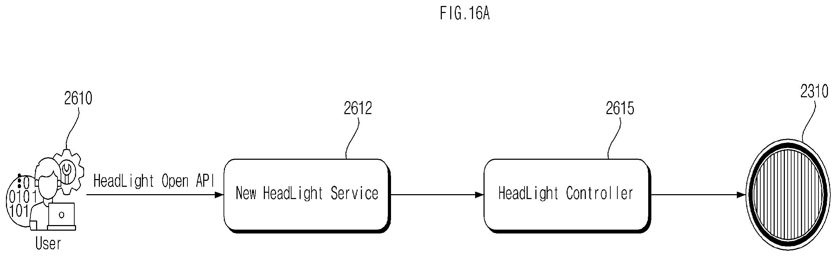

FIG. 16A is a diagram illustrating an example of executing a replacement service.

Referring to FIG. 16A, the server 400 can be configured to transmit, to the first processor 175 or the second processor 175z, data 2610 associated with a replacement service created by a user and the like.

In this case, the data 2610 associated with the replacement service can be application programming interface (API)-based data. Specifically, the data 2610 associated with the replacement service can be Open API-based data.

Meanwhile, the first processor 175 or the second processor 175z can be configured to receive the data 2610 associated with the replacement service and execute the replacement service 2612 based on the data.

Meanwhile, the first processor 175 or the second processor 175z can be configured to execute the replacement service 2612 and control the controller 2615 to output a turn-on signal, a turn-off signal, or an operation control signal to the lighting device 2310. Accordingly, a replacement service can be rapidly executed in response to a failure of the hardware device connected to the controller 1230.

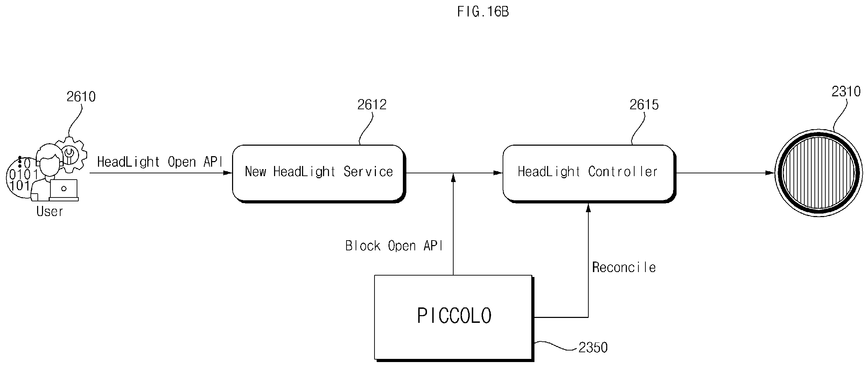

FIG. 16B is a diagram illustrating another example of executing a replacement service.

Referring to FIG. 16B, the server 400 can be configured to transmit data 2610 associated with a replacement service created by a user, etc. to the first processor 175 or the second processor 175z in a vehicle.

Meanwhile, the first processor 175 or the second processor 175z can be configured to receive the data 2610 associated with the replacement service and execute the replacement service 2612 based on the data.

Meanwhile, the first processor 175 or the second processor 175z can be configured to execute the service agent 2350 for executing a vehicle service.

Meanwhile, the first processor 175 or the second processor 175z can be configured to execute the service agent 2350 for executing a vehicle service, and in response to a hardware device failure, the service agent 2350 can be configured to execute a replacement service in addition to an executed service, by blocking an application programming interface (API) of a part of the replacement service and executing only an API of another part of the replacement service based on a safety level.

For example, in response to a hardware device failure, the service agent 2350 can be configured to further execute the replacement service 2612 in addition to the executed service, by blocking at least a part of the replacement service and executing another part of the replacement service based on a safety level. Accordingly, a replacement service can be stably executed in response to a failure of the hardware device connected to the controller 1230.

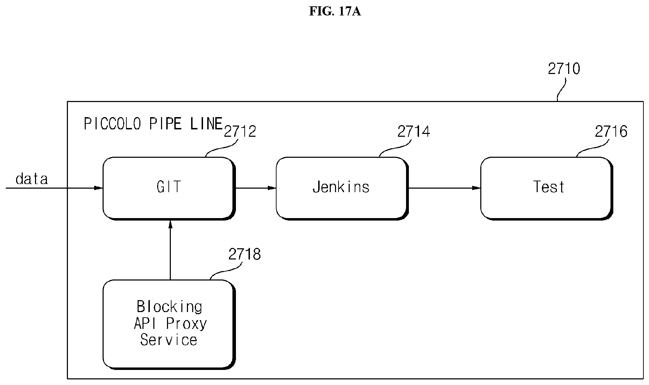

FIGS. 17A to 17C are diagrams referred to in the description of blocking an API of FIG. 16B.

First, FIG. 17A is a diagram illustrating an example of an internal configuration of a pipe line of a service agent.

Referring to FIG. 17A, a pipe line 2710 of the service agent 2350 can be configured to execute or include GIT 2712, Jenkins 2714, Test 2716, and Blocking API Proxy Service 2718.

Meanwhile, the Blocking API Proxy Service 2718 can be configured according to a safety level policy.

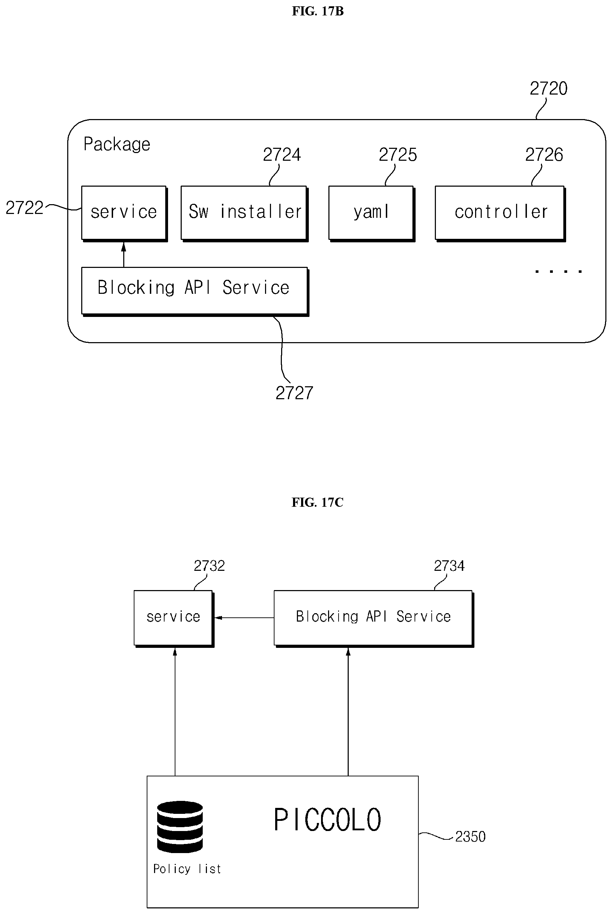

FIG. 17B is a diagram illustrating an internal configuration of an Open API package.

Referring to FIG. 17B, an Open API package 2720 can be transmitted to the vehicle control apparatus 100 in a vehicle from the server 400 and the like.

Particularly, the Open API package 2720 can be transmitted to the first processor 175 or the second processor 175z in the vehicle control apparatus 100.

Meanwhile, the Open API package 2720 can include service 2722, installer 2724, yaml file 2725, controller 2726, and Blocking API Service 2727.

For example, the processor 175 or the second processor 175z can be configured to block at least a part of a replacement service and only execute another part thereof according to the safety level based on the Blocking API Service 2727.

FIG. 17C is a diagram referred to in the description of blocking a service of a service agent.

Referring to FIG. 17C, the service agent 2350 executes a service 2732.

Meanwhile, the service agent 2350 controls the Blocking API Service 2734 to activate or deactivate the service 2732.

For example, in response to an activation signal output by the service agent 2350 to the Blocking API Service 2734, the Blocking API Service 2734 can be configured to activate the service 2732.

In another example, in response to a deactivation signal output by the service agent 2350 to the Blocking API Service 2734, the Blocking API Service 2734 can be configured to deactivate the service 2732.

Meanwhile, the service 2732 of FIG. 17C can be the virtual switching service or the replacement service described above.

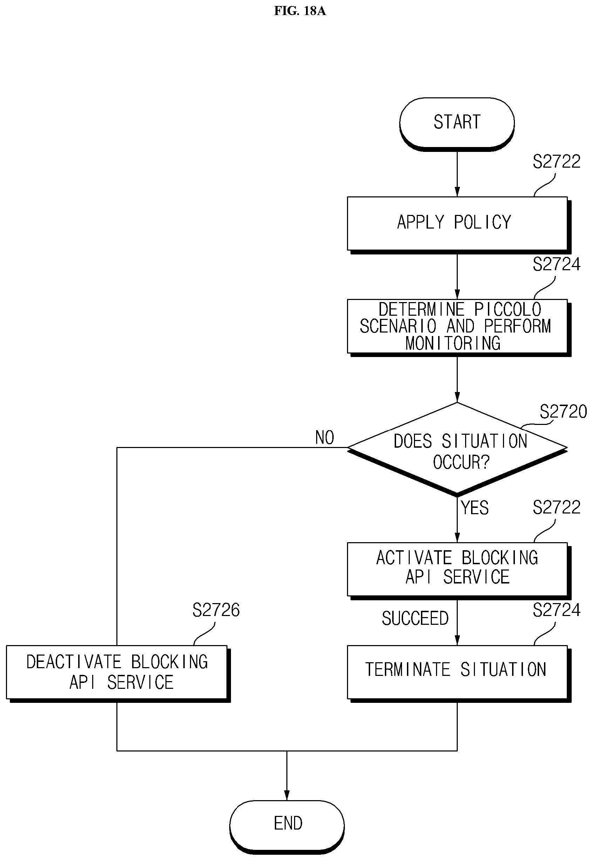

FIG. 18A is a flowchart illustrating a deactivation operation by blocking a service.

Referring to FIG. 18A, the first processor 175 or the second processor 175z can be configured to receive and apply a safety policy associated with a service (S2722).

Then, the first processor 175 or the second processor 175z can be configured to determine whether a scenario is required for the virtual switch service or the replacement service in the service agent 2350 and perform monitoring (S2724).

Then, the first processor 175 or the second processor 175z can be configured to determine whether a hardware device failure occurs, and if so, execute the virtual switch service or the replacement service.

In this case, the first processor 175 or the second processor 175z can be configured to determine whether the replacement service is blocked based on a safety level when executing the virtual switch service or the replacement service (S2720), and if so, activate the Blocking API Service 2734 and terminate the blocking (S2724). Accordingly, the replacement service 2732 can be deactivated.

Meanwhile, if blocking of the replacement service is not required in operation 2720 (S2720), the first processor 175 or the second processor 175z can be configured to deactivate the Blocking API Service 2734 (S2726). Accordingly, the replacement service 2732 can be deactivated.

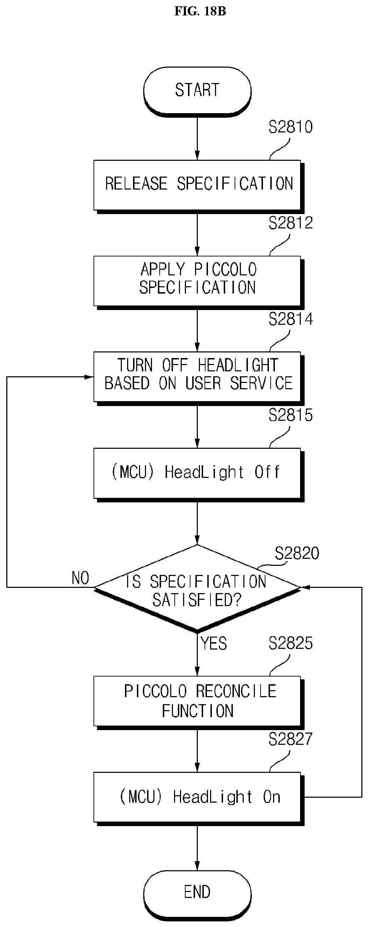

FIG. 18B is a flowchart illustrating an operation of executing a replacement service for a lighting device.

Referring to FIG. 18B, the first processor 175 or the second processor 175z can be configured to release data associated with a virtual switch service or a replacement service in order to execute the virtual switch service or the replacement service in response to a hardware device failure (S2810).

Then, the first processor 175 or the second processor 175z can be configured to apply a specification in the data associated with the virtual switch service or the replacement service to the service agent 2350 (S2812).

For example, the specification data can include turning on the vehicle lighting device 2310 when the illuminance is 100 lux or less as a vehicle enters a tunnel.

Further, the first processor 175 or the second processor 175z can be configured to execute the virtual switch service or the replacement service.

Then, in response to an input to turn off the lighting device 2310 during execution of the virtual switch service or the replacement service, the first processor 175 or the second processor 175z can be configured to control the controller 1230 to turn off the lighting device 2310.

Meanwhile, the first processor 175 or the second processor 175z can be configured to determine whether a specification in the data associated with the virtual switch service or the replacement service is satisfied while turning off the lighting device 2310 (S2820).

For example, the first processor 175 or the second processor 175z can be configured to determine whether condition data for executing the service in the data associated with the virtual switch service or the replacement service is satisfied while turning off the lighting device 2310.

Meanwhile, if the specification in the data associated with the virtual switch service or the replacement service is satisfied while turning off the lighting device 2310, the first processor 175 or the second processor 175z can be configured to activate a Reconcile function in the service agent 2350 (S2825).

Then, the first processor 175 or the second processor 175z can be configured to control the controller 1230 to turn on the lighting device 2310. Accordingly, even when a hardware failure occurs, the replacement service and the like can be stably provided in response to a vehicle driving situation.

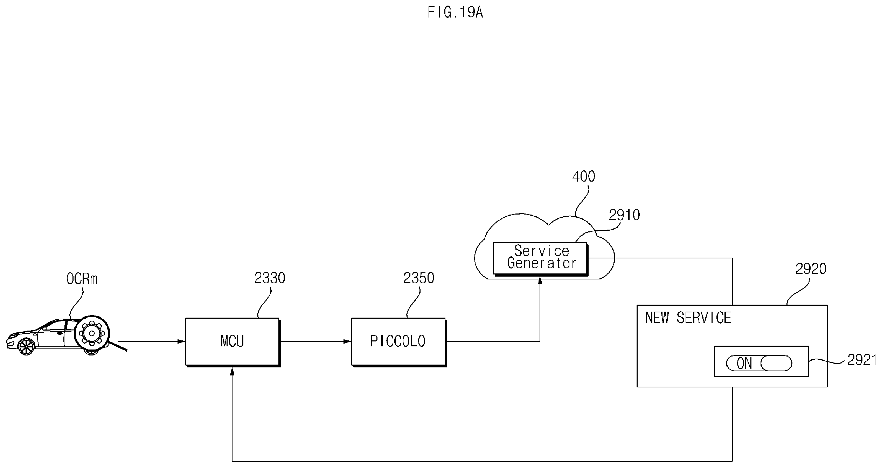

FIG. 19A is a diagram illustrating an example of executing a replacement service in response to a hardware device failure.

Referring to FIG. 19A, in response to a failure or fault in a hardware device OCRm in a vehicle, the controller 2330 electrically connected to the hardware device OCRm can be configured to transmit a fault signal or failure information to the service agent 2350.

Meanwhile, the service agent 2350 can be executed by the first processor 175 or the second processor 175z.

Meanwhile, the service agent 2350 can be configured to transmit a request for a service as an alternative in a failure situation based on the failure information.

For example, the service agent 2350 can be configured to transmit a replacement service request or a new service request to a service generator 2910 in the server 400.

The service generator 2910 in the server 400 can be configured to generate a replacement service or a new service based on the replacement service request or the new service request, and to transmit data associated with the replacement service or the new service to the first processor 175 or the second processor 175z.

Specifically, the service generator 2910 in the server 400 can be configured to transmit the data associated with the replacement service or the new service to the service agent 2350.

Meanwhile, the first processor 175 or the second processor 175z can be configured to execute the replacement service or the new service based on the data associated with the replacement service or the new service.

Specifically, the service agent 2350 can be configured to execute the replacement service or the new service based on the data associated with the replacement service or the new service.

Further, the service agent 2350 can be configured to control the controller 2330 to output a turn-on signal, a turn-off signal, or an operation control signal to a replacement hardware device. Accordingly, a replacement service can be rapidly executed in response to a hardware device failure.

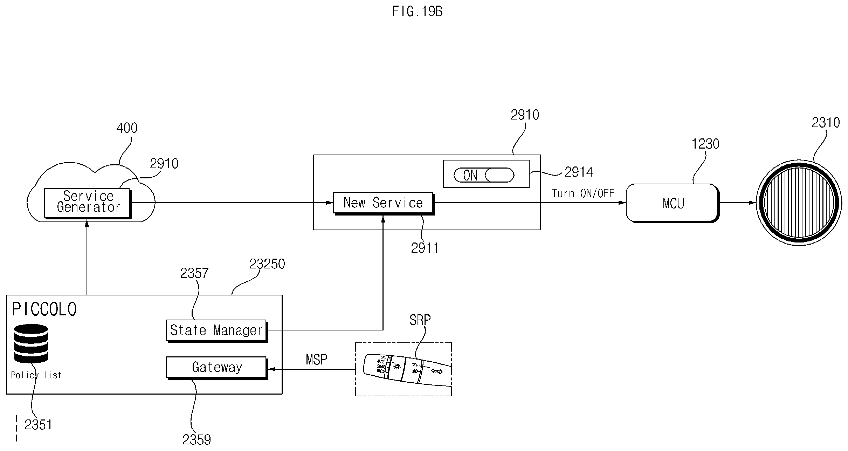

FIG. 19B is a diagram illustrating an example of executing a replacement service in response to a hardware switch failure.

Referring to FIG. 19B, the service agent 2350 receives a failure message MSP in response to a failure of a hardware switch SRP.

Specifically, a gateway 2359 in the service agent 2350 can receive the failure message MSP.

Meanwhile, the service agent 2350 can be configured to transmit a request for generating a replacement service to the service generator 2910 in the server 400 based on the receiving of the failure message MSP.

Accordingly, the service generator 2910 in the server 400 can be configured to generate a replacement service for the hardware switch, and to transmit data associated with the replacement service to the first processor 175 or the second processor 175z in the vehicle control apparatus 100.

Meanwhile, the first processor 175 or the second processor 175z can be configured to receive the data associated with the replacement service from the server 400 and execute a replacement service 2911.

Alternatively, the first processor 175 or the second processor 175z can be configured to receive the data associated with the replacement service from the server 400, and to generate a virtual switch object 2914 based on the data and display the virtual switch object 2914 on the display 180.

For example, the state manager 2357 in the service agent 2350 can be configured to transmit an execution request to the replacement service 2911 during execution of the replacement service 2911.

Meanwhile, the first processor 175 or the second processor 175z can be configured to control the controller 1230 to output a turn-on signal, a turn-off signal, or an operation control signal to the lighting device 2310 based on the execution request of the replacement service 2911. Accordingly, the lighting device 2310 can be stably operated even when a failure occurs in the hardware switch SRP.

In another example, in response to the virtual switch object 2914 displayed on the display 180 being selected, the first processor 175 or the second processor 175z can be configured to control the controller 1230 to output a turn-on signal, a turn-off signal, or an operation control signal to the lighting device 2310. Accordingly, the lighting device 2310 can be stably operated even when a failure occurs in the hardware switch SRP.

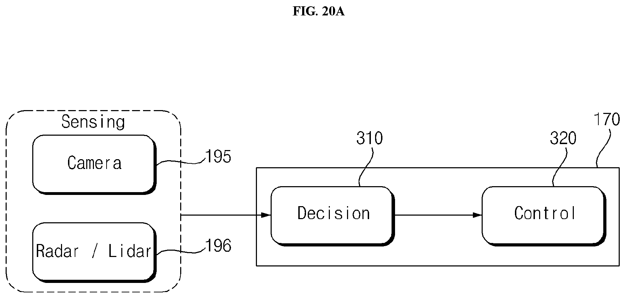

FIG. 20A is a diagram illustrating an example of determining failure of various sensors.

Referring to FIG. 20A, a sensor can include a camera 195, a radar or a lidar 196.

The first processor 175 in the first signal processing device 180 can include a decision unit 310 configured to receive sensor data from the camera 195, the radar or lidar 196 and determine whether a failure occurs in the sensor based on the sensor data, and a control unit 320 configured to perform control based on a determination result.

Meanwhile, upon determining that a failure occurs in the sensor based on the sensor data from the camera 195, the radar or lidar 196, the first processor 175 in the first signal processing device 180 can be configured to execute a replacement service.

For example, upon determining that a failure occurs in the camera 195, the first processor 175 in the first signal processing device 170 can be configured to execute a replacement service or a new service based on the sensor data from the radar or lidar 196.

In another example, upon determining that a failure occurs in the radar or lidar 196, the first processor 175 in the first signal processing device 180 can be configured to execute a replacement service or a new service based on the sensor data from the camera 195.

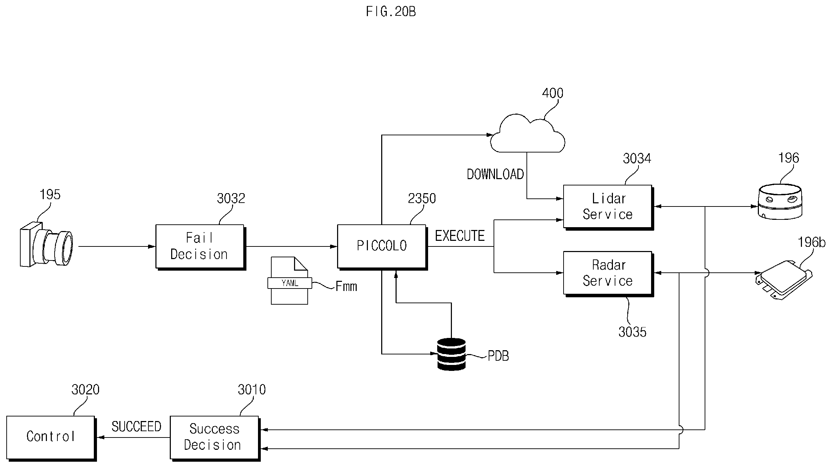

FIG. 20B is a diagram illustrating an example of executing a new service based on a lidar or radar in response to a camera failure.

Referring to FIG. 20B, the second processor 175z in the second signal processing device 170z or the first processor 175 in the first signal processing device 170 can be configured to determine a failure 3032 based on data from the camera 195.

Meanwhile, upon determining a failure, the second processor 175z in the second signal processing device 170z or the first processor 175 in the first signal processing device 170 can be configured to transmit failure information and the like to the service agent 2350.

Meanwhile, the service agent 2350 can be configured to transmit a request for generating a lidar service to the server 400 and the like.

Then, the second processor 175z in the second signal processing device 170z or the first processor 175 in the first signal processing device 170 can receive data associated with a lidar service from the server 400.

Meanwhile, the service agent 2350 can be configured to search an internal database PDB and the like to determine whether there is a radar service.

Meanwhile, upon receiving the data associated with the lidar service, the service agent 2350 can be configured to execute a lidar service 3034 in order to replace the camera 195. Accordingly, the lidar 196 can be operated.

Meanwhile, upon determining that there is a radar service 3025 in the database PDB, the service agent 2350 can be configured to execute a radar service 3025 in order to replace the camera 195. Accordingly, a radar 196b can be operated.

Meanwhile, the second processor 175z in the second signal processing device 170z or the first processor 175 in the first signal processing device 170 can be configured to perform an operation (3010) of determining whether a replacement service succeeds based on data from the lidar 196 or the radar 196b.

Further, the second processor 175z in the second signal processing device 170z or the first processor 175 in the first signal processing device 170 can be configured to continuously perform an operation (3020) of controlling the replacement service based on the operation (3010) of determining whether the replacement service succeeds.

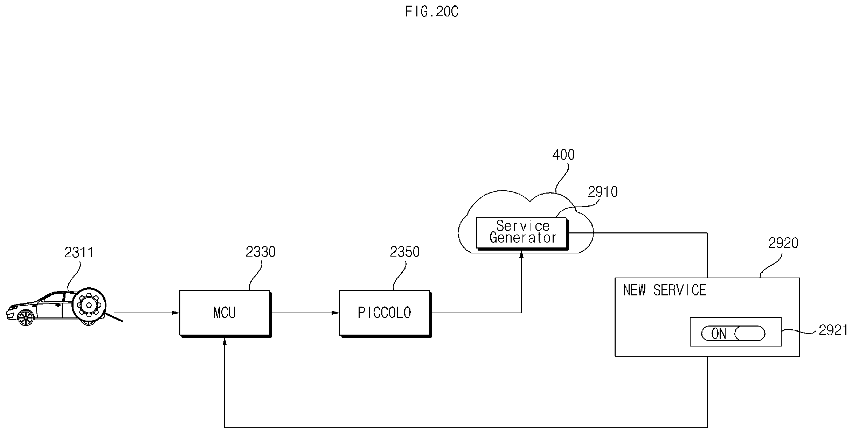

FIG. 20C is a diagram illustrating an example of executing a replacement service in response to a failure of a low beam device 2311.

Referring to FIG. 20C, in response to a failure of the low beam device 2311 in a vehicle, the controller 2330 electrically connected to the low beam device 2311 can be configured to transmit a fault signal or failure information to the service agent 2350.

Meanwhile, the service agent 2350 can be configured to be executed by the first processor 175 or the second processor 175z.

Meanwhile, the service agent 2350 can be configured to transmit a request for a service as an alternative in a failure situation based on the failure information.

For example, the service agent 2350 can be configured to transmit a replacement service request or a new service request to the service generator 2910 in the server 400.

The service generator 2910 in the server 400 can be configured to generate a replacement service or a new service based on the replacement service request or the new service request, and to transmit data associated with the replacement service or the new service to the first processor 175 or the second processor 175z.

Specifically, the service generator 2910 in the server 400 can be configured to transmit the data associated with the replacement service or the new service to the service agent 2350.

Meanwhile, the first processor 175 or the second processor 175z can be configured to execute the replacement service or the new service based on the data associated with the replacement service or the new service.

Specifically, the service agent 2350 can be configured to execute the replacement service or the new service based on the data associated with the replacement service or the new service.

In this case, the replacement service or the new service can be a service for operating a high beam device 2312 at a low beam, instead of the low beam device 2311.

Further, the service agent 2350 can be configured to control the controller 2330 to output a turn-on signal, a turn-off signal, or an operation control signal to the high beam device 2312 based on the execution of the replacement service or the new service corresponding to the low beam device 2311. Accordingly, a replacement service can be rapidly executed in response to a failure of the low beam device 2311.

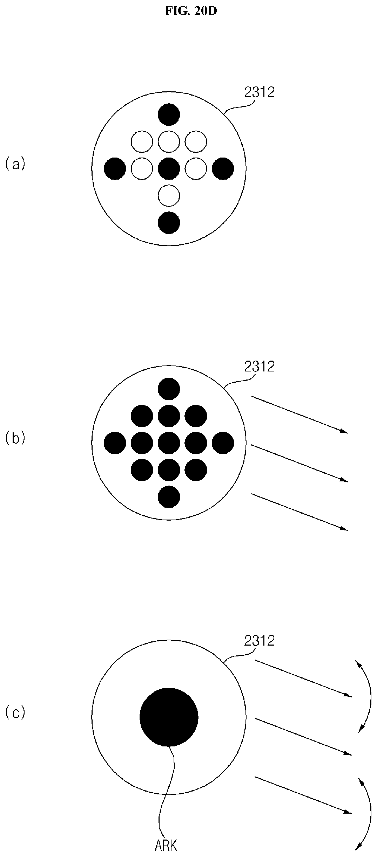

FIG. 20D is a diagram illustrating various operations of the high beam device 2312 of FIG. 20C.

Referring to FIG. 20D, the controller 2330 can be configured to turn on only some of the plurality of light emitting diodes in the high beam device 2312 as illustrated in (a) of FIG. 20D, in order to replace the low beam device 2311 of FIG. 20C in response to a failure.

In another example, the controller 2330 can be configured to control the direction of light emission of the plurality of light emitting diodes in the high beam device 2312 to be directed downwards as illustrated in (b) of FIG. 20D, in order to replace the low beam device 2311 of FIG. 20C in response to a failure.

In yet another example, the controller 2330 can be configured to control only some of the plurality of light emitting diodes in the high beam device 2312 to emit light and control the direction of light emission of some of the plurality of light emitting diodes to be directed downwards as illustrated in (c) of FIG. 20D, in order to replace the low beam device 2311 of FIG. 20C in response to a failure.

Accordingly, the high beam device 2312 can replace the function of the low beam device 2311 by using various methods.

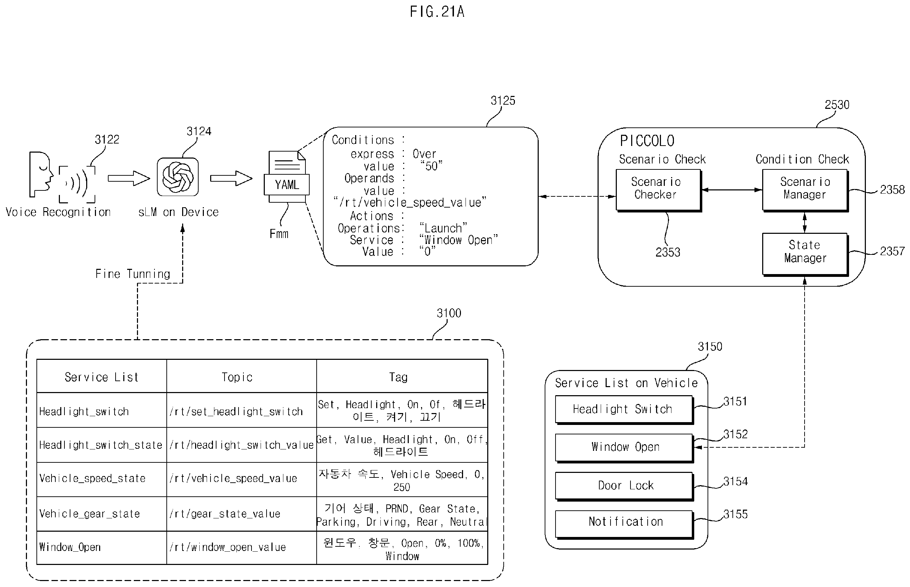

FIGS. 21A and 12B are diagrams illustrating an example of executing a service based on speech recognition.

FIG. 21A is a diagram illustrating an example of executing a service based on speech recognition.

Referring to FIG. 21A, the first processor 175 or the second processor 175z can be configured to receive speech 3122 of an occupant in a vehicle and perform speech recognition.

Particularly, the first processor 175 or the second processor 175z can be configured to process a service list 3100 of various speech-based services by using an AI processor 3124 for internal speech recognition.

In this case, the AI processor 3124 can correspond to the neural processor 179 of FIG. 6.

Meanwhile, the service list 3100 of various speech-based services can include items, such as red light switch, headlight switch table, vehicle speed state, vehicle gear state, window open service, and the like.

Meanwhile, the service list 3100 of various speech-based services can include a topic and a tag for each service.

Meanwhile, the first processor 175 or the second processor 175z can be configured to select a service execution file 3125 in order to execute a service corresponding to speech recognition after performing speech recognition based on the speech 3122.

In this case, the service execution file 3125 can be a Yaml file.

For example, the service execution file 3125 can include condition data, action data, operation data, service data, and the like.

Meanwhile, the first processor 175 or the second processor 175z can be configured to execute a service agent 2530 for executing a service corresponding to speech recognition.

The service agent 2530 can include or execute a scenario checker 2353 for checking a scenario of the service execution file 3125, a scenario manager 2358 for checking condition data and the like, a state manager 2357 for state management, and the like.

Meanwhile, the state manager 2357 can be configured to manage the state of a service and the like executed in a vehicle.

For example, the state manager 2357 can be configured to manage the state of a headlight switch service 3151, a window open service 3152, a door lock service 3154, a notification service from a vehicle service list 3150.

For example, if the speech 3122 is speech indicative of turning off a headlight, the service agent 2530 executes the headlight switch service 3151 to turn off the headlight.

In another example, if the speech 3122 is speech indicative of opening a window, the service agent 2530 executes the window open service 3152 to open the window. Accordingly, a service desired by a vehicle occupant can be executed rapidly and accurately.

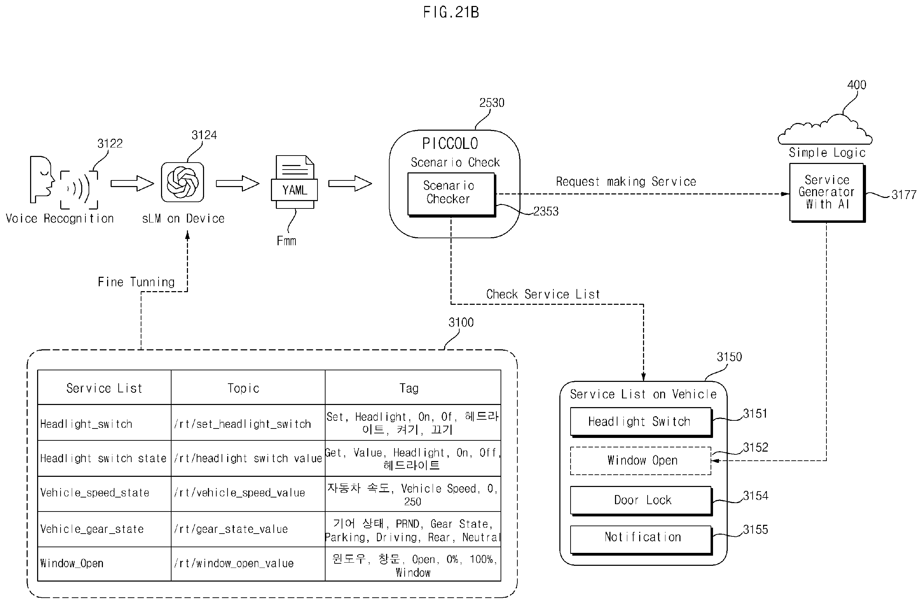

FIG. 21B is a diagram illustrating another example of executing a service based on speech recognition.

Referring to FIG. 21B, the first processor 175 or the second processor 175z can be configured to receive speech 3122 of an occupant in a vehicle and to perform speech recognition by using the AI processor 3124 and the service list 310.

Meanwhile, the first processor 175 or the second processor 175z can be configured to select a service execution file FMM for executing a service corresponding to speech recognition after performing speech recognition based on the speech 3122.

In this case, the service execution file 3125 can be a Yaml file.

Meanwhile, the first processor 175 or the second processor 175z can be configured to execute the service agent 2530 for executing a service corresponding to speech recognition.

The service agent 2530 can be configured to execute the scenario checker 2353 for checking a scenario of the service execution file 3125.

Meanwhile, the service agent 2530 can be configured to check whether a service corresponding to the speech recognition is included in the vehicle service list 3150, and to transmit a request for generating a service to the server 400 if the service is not included in the vehicle service list 3150.

The service generator 3177 in the server 400 can be configured to transmit data associated with a new service by using AI and the like.

Meanwhile, the first processor 175 or the second processor 175z can be configured to update the vehicle service list 3150 by receiving the data associated with the new service.

For example, in the case in which only the headlight switch service 3151, the door lock service 3154, and the notification service 3155, etc. are included in the vehicle service list 315 while the window open service 3152 which is a service corresponding to the speech recognition is not included therein, the service agent 2530 can be configured to transmit a request for generating the window open service 3152 to the server 400.

Meanwhile, the first processor 175 or the second processor 175z can be configured to receive data associated with the window open service 3152 from the server 400 and control the window open service 3152 to be included in the vehicle service list 3150.

Further, the service agent 2530 can be configured to execute the window open service 3152 which is a service corresponding to the speech recognition. Accordingly, a service desired by a vehicle occupant can be accurately executed.

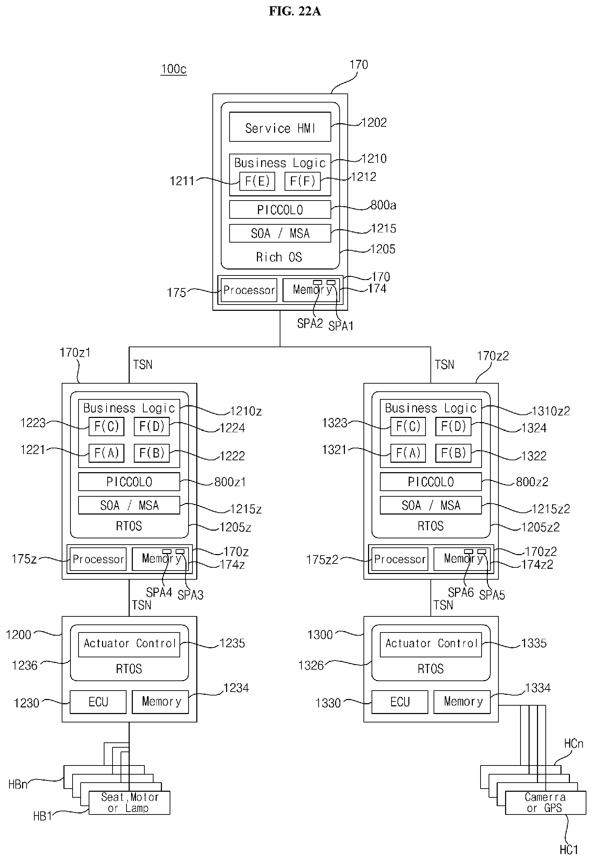

FIG. 22A is an exemplary internal block diagram of a vehicle control apparatus according to yet another embodiment of the present disclosure.

Referring to FIG. 22A, a vehicle control apparatus 100c according to yet another embodiment of the present disclosure is similar to the vehicle control apparatus 100b of FIG. 13A, with a difference being that the controller 1200 can be configured to control a seat motor or lamps HB1 to HBn, rather than the windows WD1 to WDn.

Meanwhile, the controller 1200 can be configured to receive data from a camera or GPS HC1 to HCn, instead of the vehicle internal monitoring devices DS1 to DSn.

Alternatively, the second controller 1300 can be configured to control the camera or the GPS HC1 to HCn.

Meanwhile, the first processor 175 in the vehicle control apparatus 100c according to yet another embodiment of the present disclosure can be configured to execute a first service agent 800a on the operating system 1205, unlike FIG. 13A.

Meanwhile, the second processor 175z in the vehicle control apparatus 100c according to yet another embodiment of the present disclosure can be configured to execute a second service agent 800z1 on an operating system 1205z, unlike FIG. 13A.

Meanwhile, the third processor 175z2 in the vehicle control apparatus 100c according to yet another embodiment of the present disclosure can be configured to execute a third service agent 800z2 on the operating system 1205z2, unlike FIG. 13A.

Meanwhile, the first service agent 800a, the second service agent 800z1, and the third service agent 800z2 can correspond to the service agent 800 of FIG. 9 or FIG. 10.

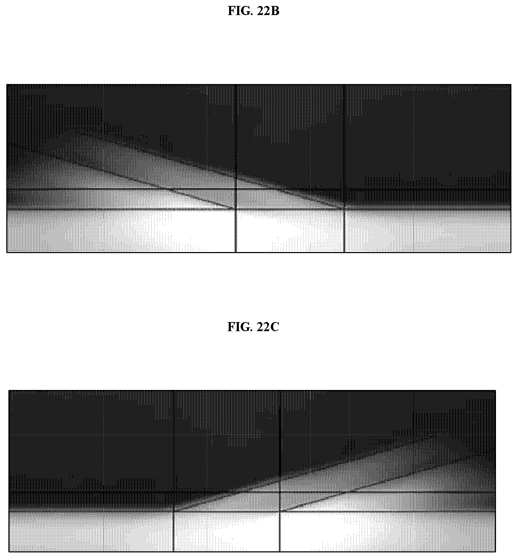

FIGS. 22B to 22D are diagrams referred to in the description of FIG. 22A.

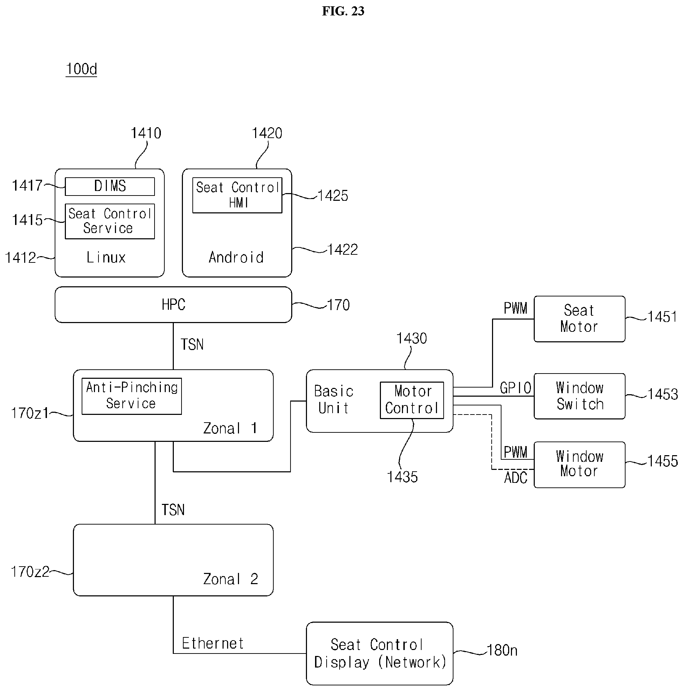

FIG. 22B is an image showing a first pattern of light output from a lamp, and FIG. 23B is an image showing a second pattern of light output from a lamp.

In the vehicle control apparatus 100c of FIG. 22A, the first processor 175, the second processor 175z, or the third processor 175z2 can be configured to set a beam pattern of the vehicle based on data from the camera or GPS HC1 to HCn by using an image including a road sign in front of the vehicle or local information from GPS.

Meanwhile, the first processor 175, the second processor 175z, or the third processor 175z2 can be configured to receive data associated with the execution of a vehicle service for a vehicle lamp pattern from the external server 400 or the external electronic device 600, etc., based on the road sign in front of the vehicle or based on the local information from GPS, or generate itself the data associated with the execution of the vehicle service for the vehicle lamp pattern.

Specifically, the first service agent 800a, the second service agent 800z1, or the third service agent 800z2 can be configured to receive the data associated with the execution of the vehicle service for the vehicle lamp pattern, and to execute the vehicle service.

For example, if a vehicle driving area is the United Kingdom (UK) based on the image including the road sign in front of a vehicle or the local information from GPS, the first processor 175 or the second processor 175z can be configured to control the controller 1200 for outputting light of a first pattern as illustrated in FIG. 22B. Accordingly, the controller 1200 can control at least one of the lamps HB1 to HBn.

In another example, if a vehicle driving area is France, in which the driving direction is different from the UK, based on the image including the road sign in front of the vehicle or the local information from GPS, the first processor 175 or the second processor 175z can be configured to control the controller 1200 for outputting light of a second pattern as illustrated in FIG. 22C. Accordingly, the controller 1200 can control at least one of the lamps HB1 to HBn.

As described above, a plurality of sensors or a plurality of actuators and the like can be used to provide a lamp pattern changing service, thereby efficiently providing a vehicle service according to a driver's intentions.

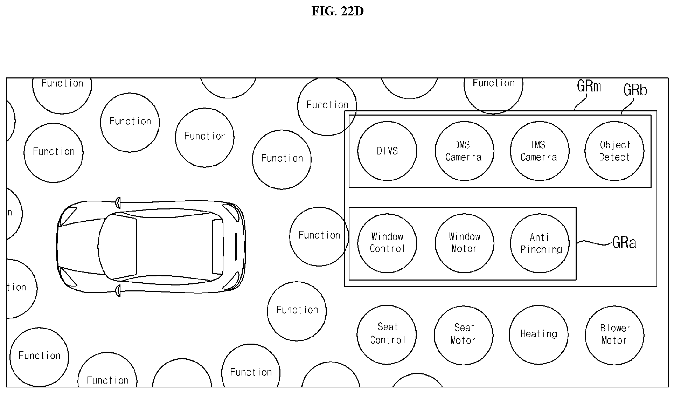

FIG. 22D is a diagram illustrating various examples of services.

Referring to FIG. 22D, examples of the services can include seat control service, seat motor service, heating service, blower motor service, window control service, window motor service, anti-pinching service, vehicle internal monitoring (DIMS) service, internal monitoring camera service, object detection service, and the like.

Meanwhile, the first processor 175 or the second processor 175z can be configured to execute a vehicle service with a combination of a plurality of services.

For example, the first processor 175, the second processor 175z, or the third processor 175z2 can be configured to execute a first vehicle service including the window control service, the window motor service, and the anti-pinching service.

In this case, the first vehicle service can be downloaded from the external server 400 or the external electronic device 600, or can be generated by the first processor 175, the second processor 175z, or the third processor 175z2.

Meanwhile, the first service agent 800a, the second service agent 800z1, or the third service agent 800z2 can be configured to receive data associated with the execution of the first vehicle service including a composite service, and can be configured to execute the first vehicle service based on the data.

In another example, the first processor 175, the second processor 175z, or the third processor 175z2 can be configured to execute a second vehicle service including the vehicle internal monitoring (DIMS) service, the internal monitoring camera service, and the object detection service.

Meanwhile, the first service agent 800a, the second service agent 800z1, or the third service agent 800z2 can be configured to receive data associated with the execution of the second vehicle service including a composite service, and can be configured to execute the second vehicle service based on the data.

FIG. 23 is an exemplary internal block diagram of a vehicle control apparatus according to yet another embodiment of the present disclosure.

Referring to FIG. 23, a vehicle control apparatus 100d according to yet another embodiment of the present disclosure can include a first signal processing device 170 which is a central signal processing device, a second signal processing device and a third signal processing device 170z2170z1 which are zonal signal processing devices, and a control device 1430.

The first signal processing device 170 can be configured to execute the vehicle internal monitoring (DIMS) service and the seat control service on the first operating system, and can be configured to execute the seat control HMI service on the second operating system.

The second signal processing device 170z1 can be configured to perform Time-Sensitive Networking (TSN) communication with the first signal processing device 170 and can be electrically connected with a control device 1430 to control the control device 1430.

Meanwhile, the second signal processing device 170z1 can be configured to execute the anti-pinching service and control the control device 1430 based on the anti-pinching service.

The control device 1430 can be configured to execute monitor control 1435 based on the anti-pinching service.

For example, the control device 1430 can be configured to output a Pulse Width Modulation (PWM) signal to a seat motor 1451, to output a general-purpose input/output (GPIO) signal to a window switch 1453, and to output a PWM signal to a window motor 1455.

Meanwhile, the control device 1430 can be configured to receive an ADC Signal from the window motor 1455, and to output the PWM signal to the window motor 1455 based on the ADC signal.

Accordingly, the anti-pinching service corresponding to composite control, such as seat, window, etc., can be efficiently executed by using the control device 1430.

The third signal processing device 170z2 can be configured to perform TSN communication with the second signal processing device 170z1 and control a seat control display 180n.

In this case, the third signal processing device 170z2 can display predetermined information or image on the seat control display 180n based on Ethernet communication. Meanwhile, the seat control display 180n can be a network display.

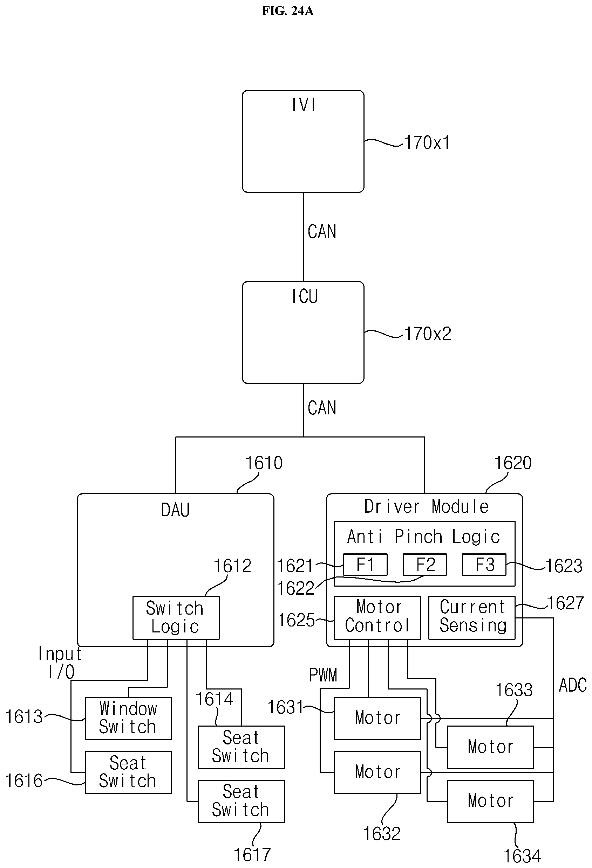

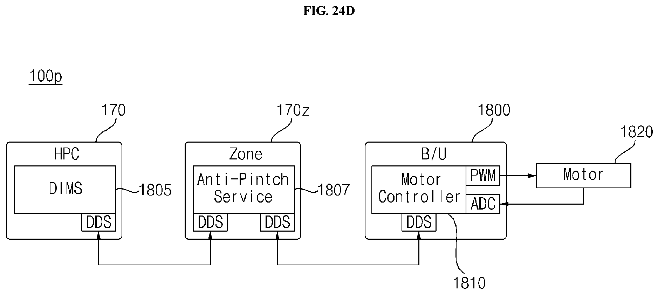

FIGS. 24A to 25B are diagrams referred to in the description of FIG. 23.

FIG. 24A is a diagram illustrating an example of anti-pinching in a vehicle control apparatus associated with the present disclosure.

Referring to FIG. 24A, a first signal processing device 170x1 in the vehicle control apparatus associated with the present disclosure can be configured to perform CAN communication with a second signal processing device 170x2, and the second signal processing device 170x2 can be configured to perform CAN communication with a control device 1610 and a drive device 1620.

Meanwhile, the control device 1610 can be configured to control a window switch 1613, a seat switch 1614, a seat switch 1616, and a seat switch 1617 based on a switch logic 1612.

Meanwhile, the drive device 1620 can be configured to execute a plurality of vehicle services 1621, 1622, and 1623 in the anti-pinching service, and control a plurality of motors 1631 to 1634 based on motor control 1625.

Meanwhile, the drive device 1620 can be configured to perform current sensing 1627 based on an ADC signal which is a sensing signal from the plurality of motors 1631 to 1634, and control the plurality of motors 1631 to 1634 based on the current sensing 1627.

The vehicle control apparatus associated with the present disclosure has a drawback in that the plurality of vehicle services 1621, 1622, and 1623 are executed in the drive device 1620, and thus cannot be easily updated, and it is difficult to add a new function.

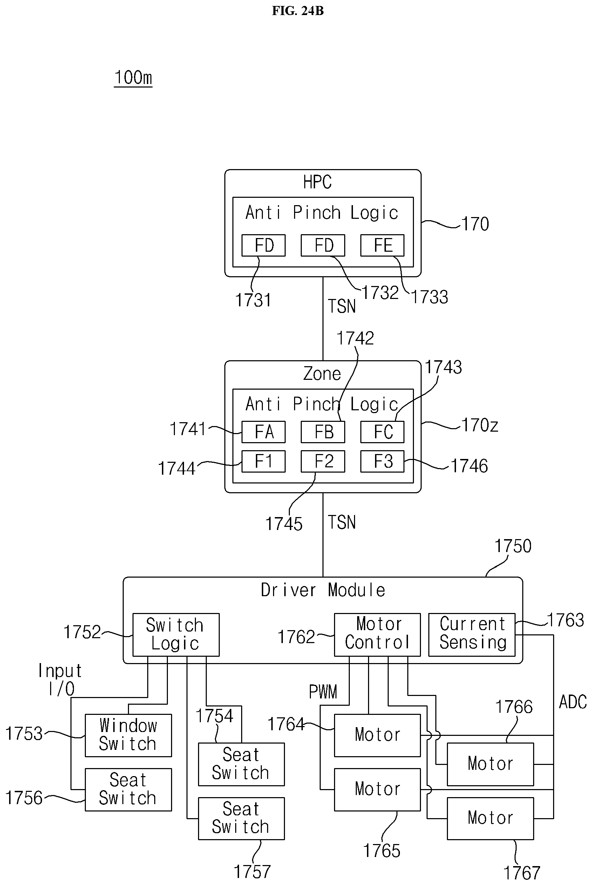

FIG. 24B is a diagram illustrating another example of anti-pinching in a vehicle control apparatus according to an embodiment of the present disclosure.

Referring to FIG. 24B, a first signal processing device 170 in a vehicle control apparatus 100m according to an embodiment of the present disclosure can be configured to perform TSN communication with a second signal processing device 170z, and the second signal processing device 170z can be configured to perform TSN communication with a control device 1750.

The first signal processing device 170 can be configured to execute a plurality of vehicle services 1731, 1732, and 1733 in the anti-pinching service.

In this case, the first signal processing device 170 can be configured to update or newly receive at least one of the plurality of vehicle services 1731, 1732, and 1733.

The second signal processing device 170z can be configured to execute a plurality of vehicle services 1741 to 1746 in the anti-pinching service.

In this case, the second signal processing device 170z can be configured to update only some services 1741 to 1743 without updating other services 1745 and 1746 among the plurality of vehicle services 1741 to 1746.

Unlike FIG. 24A, the control device 1750 can have the function of a driver, thereby enabling integrated functionality.

Meanwhile, the control device 1750 can be configured to control a window switch 1753, a seat switch 1754, a seat switch 1757, and a seat switch 1757 based on a switch logic 1712.

Meanwhile, the control device 1750 can be configured to control a plurality of motors 1764 to 1767 based on motor control 1762.

Meanwhile, the control device 1750 can be configured to perform current sensing 1763 based on an ADC signal which is a sensing signal from the plurality of motors 1764 to 1767, and control the plurality of motors 1764 to 1767 based on the current sensing 1763.

In the vehicle control apparatus 100m according to an embodiment of the present disclosure, the anti-pinching service is executed in the first signal processing device 170 or the second signal processing device 170z, rather than the control device 1750, and thus can be easily updated.

Particularly, the updating is performed based on TSN communication rather than CAN communication, thereby allowing for rapid updating.

Meanwhile, unlike FIG. 24A, the control device 1750 provides integrated functionality, thereby executing a composite service including motor control, switch control, and the like.

FIG. 24B is a diagram illustrating another example of anti-pinching in a vehicle control apparatus according to an embodiment of the present disclosure.

Meanwhile, unlike FIG. 24B, it is possible that the first signal processing device 170 can be configured to execute the first service agent 800a, and the second signal processing device 170z can be configured to execute the second service agent 800b.

The first service agent 800a and the second service agent 800b can correspond to the service agent 800 of FIG. 9 or FIG. 10.

Particularly, the first service agent 800a and the second service agent 800b can be configured to update data associated with the execution of a vehicle service or YAML file data from a package service 1792 in the server 1790.

In addition, the first service agent 800a and the second service agent 800b can be configured to implement multiple functions by using the control device 1750 based on the updated data associated with the execution of a vehicle service or YAML file data.

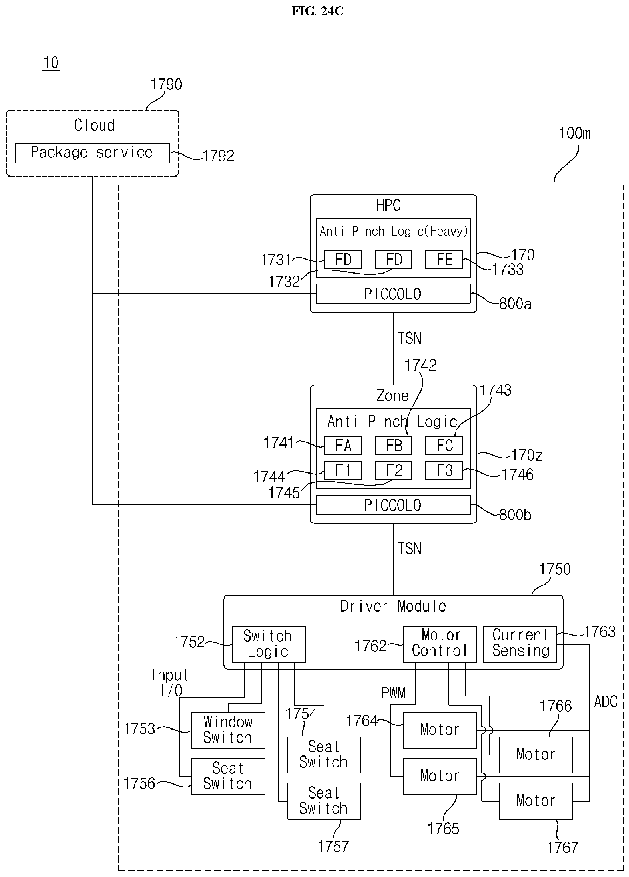

FIG. 24C is a diagram illustrating yet another example of anti-pinching in a vehicle control apparatus according to an embodiment of the present disclosure.

Referring to FIG. 24C, a first signal processing device 170 in a vehicle control apparatus 100p according to an embodiment of the present disclosure can be configured to execute a vehicle internal monitoring service 1805, and to transmit information associated with the execution of the vehicle internal monitoring service 1805 to a second signal processing device 170z.

Then, the second signal processing device 170z can be configured to execute an anti-pinching service 1807 based on the information associated with the execution of the vehicle internal monitoring service 1805, and control a control device 1800 based on data associated with the execution of the anti-pinching service 1807.

Subsequently, the control device 1800 can be configured to control a motor 1820 by executing motor control 1810 based on the data associated with the execution of the anti-pinching service 1807.

Meanwhile, the control device 1800 can be configured to receive current sensing information from the motor 1820 while controlling the motor 1820, and to transmit the current sensing information to the second signal processing device 170z.

Meanwhile, the second signal processing device 170z determines whether condition data in the data associated with the execution of the anti-pinching service 1807 is satisfied based on the received current sensing information, and if so, the second signal processing device 170z can continuously execute the anti-pinching service 1807.

Meanwhile, the second signal processing device 170z can be configured to update condition data or action data in the data associated with the execution of the anti-pinching service 1807, and control the control device 1800 according to an updated new function.

Meanwhile, based on a combination of the vehicle internal monitoring service 1805 in the first signal processing device 170 with the anti-pinching service 1807 in the second signal processing device 170z, the control device 1800 can be configured to control a window motor 1820 for at least one of window closing speed, window opening control, window closing strength, and automatic window locking.

Accordingly, an SOA-based new service or updated service can be efficiently executed.

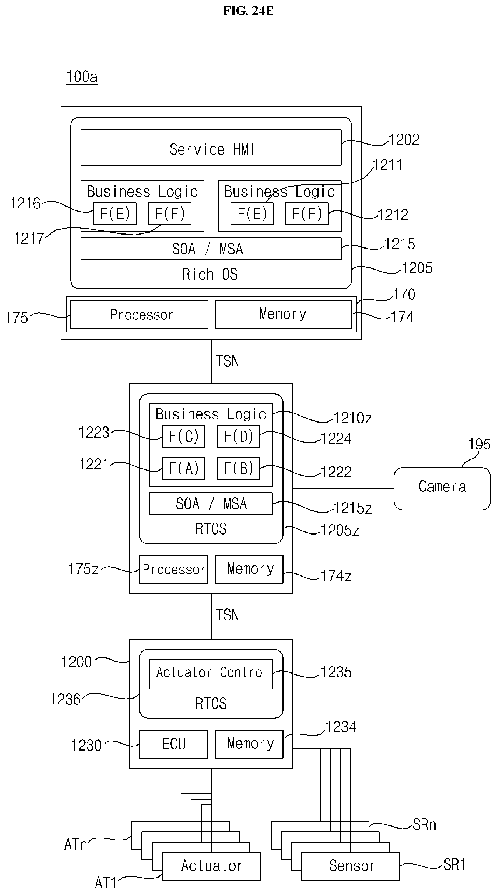

FIG. 24E is a diagram illustrating an example of providing a vehicle service when a new device is added.

Referring to FIG. 24E, a vehicle control apparatus 100a according to an embodiment of the present disclosure includes a first signal processing device 170, a second signal processing device 170z electrically connected to the first signal processing device 170, and a control device 1200 including a controller 1230 electrically connected to the second signal processing device 170z and configured to control a plurality of actuators AT1 to ATn.

Meanwhile, when a first device 195 is added to the second signal processing device 170z, the second signal processing device 170z can be configured to transmit information associated with the added first device 195 to the first signal processing device 170.

Meanwhile, the first processor 175 in the first signal processing device 170 can be configured to execute an SOA-based service or a microservice 1215 on the operating system 1205.

Meanwhile, the first processor 175 in the first signal processing device 170 can be configured to execute a logic-based first vehicle service 1211 and a logic-based second vehicle service 1212 on the operating system 1205.

Meanwhile, the first processor 175 in the first signal processing device 170 can be configured to receive data associated with the execution of a vehicle service corresponding to the first device 195, from the external server 400 and the like based on the information associated with the added first device 195.

Further, the first processor 175 in the first signal processing device 170 can be configured to execute additional services 1216 and 1217 associated with the added first device 195.

In this case, the additional services 1216 and 1217 can be DIMS services associated with the first device 195 corresponding to a camera.

Meanwhile, the second processor 175z in the second signal processing device 170z can be configured to execute a plurality of vehicle services 1221 to 1224, as illustrated in FIG. 12A.

The control device 1200 according to an embodiment of the present disclosure can include a controller 1230 and a memory 1234, and can be configured to control at least one of the plurality of actuators AT1 to ATn based on DIMS by using the additional services 1216 and 1217 in the first signal processing device 170.

As a result, when the first device 195 is newly connected to the second signal processing device 170z or the control device 1200, the first processor 175 can be configured to receive, from the server 400, data for executing a service corresponding to the first device 195 and can be configured to execute the corresponding service. Accordingly, a new service or an updated service corresponding to the first device 195 can be efficiently executed.

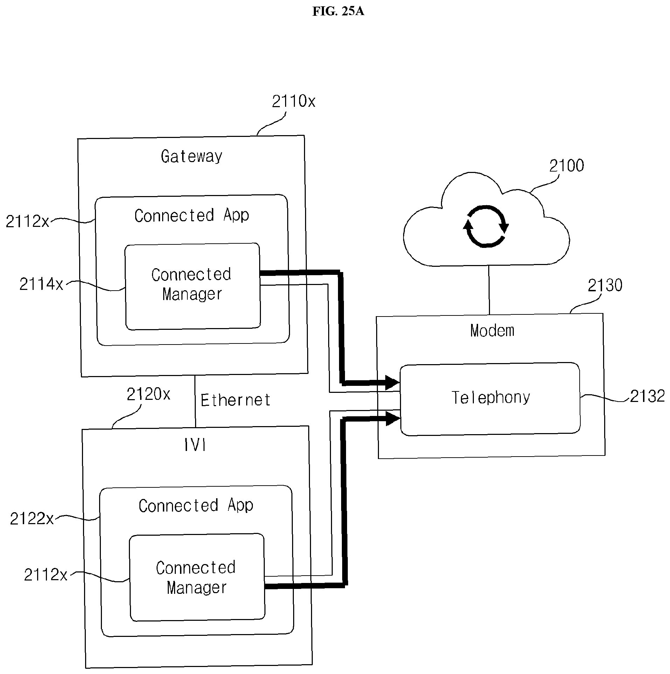

FIG. 25A is a diagram illustrating an example of operating a vehicle control apparatus associated with the present disclosure.

Referring to FIG. 25A, a vehicle control apparatus 100x associated with the present disclosure can include a first signal processing device 2110x configured to operate as a gateway, a second signal processing device 2120x configured to operate for a display, and a communication device 2130 configured to exchange data with a server 2100.

The first signal processing device 2110x can be configured to execute a connected application 2112x including a connected manager 2114x.

Meanwhile, the second signal processing device 2120x can be configured to execute a connected application 2122x including a connected manager 2112x, separately from the first signal processing device 2110x.

Each of the signal processing devices 2110x and 2120x can separately execute the applications 2112x and 2122x, respectively, and each of the applications 2112x and 2122x exchanges data with the server 2100 via a communication service 2132 in the communication device 2130.

The structure of the vehicle control apparatus 100x associated with the present disclosure in FIG. 25A can be referred to as a monolithic architecture, and the structure has a drawback in that data transmission is inefficient and update is difficult.

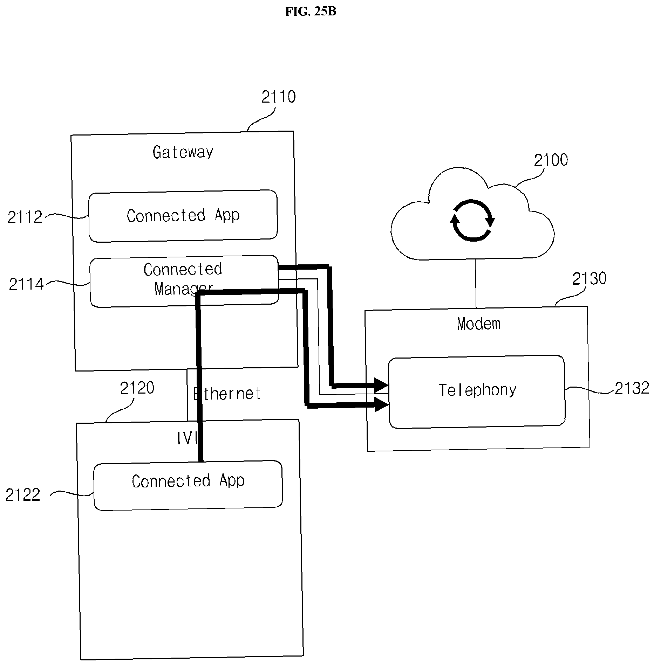

FIG. 25B is a diagram illustrating an example of operating a vehicle control apparatus according to an embodiment of the present disclosure.

A vehicle control apparatus 100 according to an embodiment of the present disclosure can include a first signal processing device 2110 configured to operate as a gateway, a second signal processing device 2120 configured to operate for a display, and a communication device 2130 configured to exchange data with a server 2100.

The first signal processing device 2110 can separately execute a connected manager 2114 and a connected application 2112.

Meanwhile, the second signal processing device 2120 can be configured to execute a connected application 2122 without executing a connected manager.

In this case, the connected application 2122 in the second signal processing device 2120 can be connected to the communication device 2130 via the connected manager 2115 in the first signal processing device 2110.

As a result, each of the signal processing devices 2110 and 2120 can separately execute the applications 2112 and 2122, respectively, and can use in common the connected manager 2114 in the first signal processing device 2110, and can exchange data with the server 2100 via the communication service 2132 in the communication device 2130.

The structure of the vehicle control apparatus 100 according to an embodiment of the present disclosure in FIG. 25B can be referred to as a Service Oriented Architecture.

In this structure, data transmission and the like can be efficiently performed, and particularly, update can be efficiently executed.

As described above, a signal processing device and a vehicle control device including the same according to an embodiment of the present disclosure includes: a first signal processing device including a first processor and a first memory; a second signal processing device electrically connected to the first signal processing device and including a second processor and a second memory; and a control device electrically connected to the second signal processing device and configured to receive a signal from a hardware switch or a sensor or to control at least one actuator, wherein the first processor or the second processor is configured to: in response to a failure of the hardware switch, execute a virtual switch service and output a virtual switch object corresponding to the virtual switch service to a display which is electrically connected; and in response to the virtual switch object being selected, control a controller to output a turn-on signal, a turn-off signal, or an operation control signal to the actuator. Accordingly, a replacement service can be rapidly executed in response to the failure of the hardware device connected to the controller. Particularly, a Service-Oriented Architecture (SOA)-based replacement service can be rapidly executed in response to the failure of the hardware device connected to the controller.

Meanwhile, the first processor or the second processor can be configured to execute a service agent for executing a vehicle service, wherein in response to the failure of the hardware switch, the service agent can be configured to further execute the virtual switch service in addition to an executed service, wherein the virtual switch service can be configured to display the virtual switch object on the display. Accordingly, a replacement service can be rapidly executed in response to the failure of the hardware device connected to the controller.

Meanwhile, in response to the failure of the hardware switch, the first processor or the second processor can be configured to receive data associated with the virtual switch service from an external server or an external electronic device, and store the data associated with the virtual switch service in the first memory or the second memory. Accordingly, a replacement service can be efficiently executed in response to the failure of the hardware device connected to the controller.

Meanwhile, the first processor or the second processor can be configured to receive the data associated with the virtual switch service in a file format. Accordingly, a replacement service can be efficiently executed in response to the failure of the hardware device connected to the controller.

Meanwhile, the first processor or the second processor can be configured to not transmit the data associated with the virtual switch service to the control device. Accordingly, a replacement service can be efficiently executed in response to the failure of the hardware device connected to the controller.

Meanwhile, in response to the virtual switch service being executed and the virtual switch object being selected after the data associated with the virtual switch service is stored, the controller can be configured to control the actuator. Accordingly, a replacement service can be rapidly executed in response to the failure of the hardware device connected to the controller.

Meanwhile, the second memory can include a changed data area for storing the data associated with the virtual switch service and a fixed data area for storing data associated with a fixed service. Accordingly, a replacement service can be efficiently executed in response to the failure of the hardware device connected to the controller.

Meanwhile, the first memory can include a changed data area for storing data associated with the virtual switch service. Accordingly, a replacement service can be rapidly executed in response to the failure of the hardware device connected to the controller.

Meanwhile, the first processor or the second processor can be configured to change an executed virtual switch service based on a type of failure of the hardware switch, and display a virtual switch object corresponding to the changed virtual switch service on the display. Accordingly, a replacement service can be rapidly executed in response to the failure of the hardware device connected to the controller.

Meanwhile, in response to a failure of the sensor, the first processor or the second processor can be configured to execute a virtual switch service or a replacement sensor service and output a virtual switch object corresponding to the virtual switch service or a replacement sensor object corresponding to the replacement sensor service to a display which is electrically connected. Accordingly, a replacement service can be rapidly executed in response to the failure of the hardware device connected to the controller.

Meanwhile, in response to the virtual switch object or the replacement sensor object being selected, the first processor or the second processor can be configured to output a turn-on signal, a turn-off signal, or an operation control signal to the actuator. Accordingly, a replacement service can be efficiently executed in response to the failure of the hardware device connected to the controller.

Meanwhile, the first processor or the second processor can be configured to execute a service agent for executing a vehicle service, wherein in response to the failure of the sensor, the service agent can be configured to further execute the virtual switch service or the replacement sensor service in addition to an executed service. Accordingly, a replacement service can be rapidly executed in response to the failure of the hardware device connected to the controller.

Meanwhile, the first processor or the second processor can be configured to: in response to the failure of the sensor, receive data associated with the virtual switch service or the replacement sensor service from an external server or an external electronic device; and in response to condition data in data associated with execution of the virtual switch service or the replacement sensor service being satisfied, execute the virtual switch service or the replacement sensor service. Accordingly, a replacement service can be rapidly executed in response to the failure of the hardware device connected to the controller.

Meanwhile, in response to a failure of the actuator, the first processor or the second processor can be configured to execute a replacement actuator service and to output a replacement actuator object corresponding to the replacement actuator service to the display which is electrically connected. Accordingly, a replacement service can be rapidly executed in response to the failure of the hardware device connected to the controller.

Meanwhile, in response to the replacement actuator object being selected, the first processor or the second processor can be configured to control the controller to output a turn-on signal, a turn-off signal, or an operation control signal to another actuator. Accordingly, a replacement service can be efficiently executed in response to the failure of the hardware device connected to the controller.

Meanwhile, the first controller or the second controller can be configured to execute a service agent for executing a vehicle service, wherein in response to the failure of the actuator, the service agent can be configured to further execute the replacement actuator service in addition to an executed service. Accordingly, a replacement service can be rapidly executed in response to the failure of the hardware device connected to the controller.

A vehicle control apparatus according to another embodiment of the present disclosure includes: a first signal processing device including a first processor and a first memory; a second signal processing device electrically connected to the first signal processing device and including a second processor and a second memory; and a control device electrically connected to the second signal processing device and configured to receive a signal from at least one hardware device or to control the hardware device, wherein in response to a failure of the hardware device, the first processor or the second processor is configured to execute a replacement service corresponding to the hardware device and control a controller to output a turn-on signal, a turn-off signal, or an operation control signal to another hardware device based on the execution of the replacement service. Accordingly, a replacement service can be rapidly executed in response to the failure of the hardware device connected to the controller. Particularly, a Service-Oriented Architecture (SOA)-based replacement service can be rapidly executed in response to the failure of the hardware device connected to the controller.

Meanwhile, in response to the failure of the hardware device, the first processor or the second processor can be configured to receive data associated with the replacement service from an external server or an external electronic device, and store the data associated with the replacement service in the first memory or the second memory. Accordingly, a replacement service can be efficiently executed in response to the failure of the hardware device connected to the controller.

Meanwhile, the first processor or the second processor can be configured to not transmit the data associated with the replacement service to the control device. Accordingly, a replacement service can be efficiently executed in response to the failure of the hardware device connected to the controller.

Meanwhile, the first processor or the second processor can be configured to execute a service agent for executing a vehicle service, wherein in response to the failure of the hardware device, the service agent can be configured to further execute the replacement service in addition to an executed service, by blocking at least a part of the replacement service and executing another part of the replacement service based on a safety level. Accordingly, a replacement service can be stably executed in response to the failure of the hardware device connected to the controller.

Meanwhile, the first controller or the second controller can be configured to execute a service agent for executing a vehicle service, wherein in response to the failure of the hardware device, the service agent can be configured to further execute the replacement service in addition to an executed service, by blocking an application programming interface (API) of a part of the replacement service and executing only an API of another part of the replacement service based on a safety level. Accordingly, a replacement service can be stably executed in response to the failure of the hardware device connected to the controller.

It will be apparent that, although the preferred embodiments have been shown and described above, the present disclosure is not limited to the above described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A vehicle control apparatus (100) comprising:
a first signal processing device (170) including a first processor (175) and a first memory (174);
a second signal processing device (170z) electrically connected to the first signal processing device and including a second processor (175z) and a second memory (174z), and
a control device (1200) electrically connected to the second signal processing device (170z) and configured to receive a signal from a hardware switch or a sensor and to control at least one actuator (AT),
wherein the first processor (175) or the second processor (175z) is configured to:
in response to a failure of the hardware switch, execute a virtual switch service and output a virtual switch object corresponding to the virtual switch service to a display (180) which is electrically connected; and
in response to the virtual switch object being selected, control the control device (1200) to output a turn-on signal, a turn-off signal, or an operation control signal to the actuator.

2. The vehicle control apparatus of claim 1, wherein the first processor (175) or the second processor (175z) is configured to execute a service agent (2350) for executing a vehicle service,
wherein in response to the failure of the hardware switch, the service agent (2350) is configured to further execute the virtual switch service in addition to another service being executed,
wherein the virtual switch service is configured to display the virtual switch object on the display.

3. The vehicle control apparatus of any one of claims 1 to 2, wherein in response to the failure of the hardware switch, the first processor (175) or the second processor (175z) is configured to receive data associated with the virtual switch service from an external server or an external electronic device, and store the data associated with the virtual switch service in the first memory or the second memory.

4. The vehicle control apparatus of claim 3, wherein the first processor (175) or the second processor (175z) is configured to not transmit the data associated with the virtual switch service to the control device.

5. The vehicle control apparatus of claim 3, wherein in response to the virtual switch service being executed and the virtual switch object being selected after the data associated with the virtual switch service is stored, the control device (1200) is configured to control the actuator.

6. The vehicle control apparatus of any one of claims 1 to 5, wherein the second memory (174z) comprises a variable data storage area for storing the data associated with the virtual switch service and a fixed data storage area for storing data associated with a fixed service.

7. The vehicle control apparatus of any one of claims 1 to 6, wherein the first processor (175) or the second processor (175z) is configured to change an executed virtual switch service based on a type of failure of the hardware switch, and display a virtual switch object corresponding to the changed virtual switch service on the display.

8. The vehicle control apparatus of any one of claims 1 to 7, wherein in response to a failure of the sensor, the first processor (175) or the second processor (175z) is configured to execute a virtual switch service or a replacement sensor service and output a virtual switch object corresponding to the virtual switch service or a replacement sensor object corresponding to the replacement sensor service to a display which is electrically connected.

9. The vehicle control apparatus of claim 8, wherein in response to the virtual switch object or the replacement sensor object being selected, the first processor (175) or the second processor (175z) is configured to output a turn-on signal, a turn-off signal, or an operation control signal to the actuator.

10. The vehicle control apparatus of claim 8, wherein the first processor (175) or the second processor (175z) is configured to execute a service agent (2350) for executing a vehicle service,
wherein in response to the failure of the sensor, the service agent (2350) is configured to further execute the virtual switch service or the replacement sensor service in addition to the executed vehicle service.

11. The vehicle control apparatus of any one of claims 1 to 10, wherein the first processor (175) or the second processor (175z) is configured to:
in response to the failure of the sensor, receive data associated with the virtual switch service or the replacement sensor service from an external server or an external electronic device; and
in response to condition data in data associated with execution of the virtual switch service or the replacement sensor service being satisfied, execute the virtual switch service or the replacement sensor service.

12. The vehicle control apparatus of claim 11, wherein in response to a failure of the actuator, the first processor (175) or the second processor (175z) is configured to execute a replacement actuator service and output a replacement actuator object corresponding to the replacement actuator service to the display which is electrically connected.

13. The vehicle control apparatus of claim 12, wherein in response to the replacement actuator object being selected, the first processor (175) or the second processor (175z) is configured to control the controller to output a turn-on signal, a turn-off signal, or an operation control signal to another actuator.

14. The vehicle control apparatus of claim 11, wherein the first controller (175) or the second controller (175z) is configured to execute a service agent (2350) for executing a vehicle service,
wherein in response to the failure of the actuator, the service agent (2350) is configured to further execute the replacement actuator service in addition to the executed vehicle service.
